# EUROPEAN PATENT APPLICATION

(11) **EP 4 814 236 A1**
(43) Date of publication of application: **30.09.2026**
(21) Application number: 26167456.8
(22) Date of filing: 25.03.2026
(51) Int. Cl.: E04H 4/16, E04H 4/12

(54) **SWIMMING POOL ROBOT**

(30) Priority: 26.03.2025 WO PCT/CN2025/085184
(71) Applicant: Xingmai Innovation Technology (Suzhou) Co., Ltd., Suzhou, Jiangsu 215124 (CN)
(72) Inventor: WANG, Shengle, Suzhou, Jiangsu 215124 (CN)
(74) Representative: Huang, Liwei

(57) **Abstract**

The present disclosure provides a swimming pool robot (1000). The swimming pool robot includes: a first body (1001); a second water inlet (1032) provided on the first body; a first filtering box (1051) at least partially provided in the first body, where the second water inlet is in fluid communication with the first filtering box; and a guiding mechanism (1042) provided on the first body. When the guiding mechanism is in an operation state, in a lateral direction of the first body, the guiding mechanism at least partially extends beyond the first body and is configured to guide liquid outside the first body to flow toward the second water inlet and flow into the first filtering box through the second water inlet. In this way, a water surface cleaning effect of the swimming pool robot can be improved.

## Description

### CROSS-REFERENCE TO RELATED APPLICATIONS

The present disclosure claims priority to International Patent Application No. PCT/CN2025/085184, filed on March 26, 2025 and entitled "METHOD FOR CONTROLLING CLEANING SYSTEM AND CLEANING SYSTEM", which is incorporated herein by reference in its entirety.

### TECHNICAL FIELD

The present disclosure relates to the technical field of cleaning devices, and in particular, to a swimming pool robot.

### BACKGROUND

A cleaning device used in water is characterized by low costs, high intelligence, and being easy to use. For example, as a type of cleaning device, a swimming pool robot is increasingly widely used in cleaning a swimming pool or a pool. However, a water surface cleaning effect of an existing swimming pool robot needs to be improved.

### SUMMARY

According to a first aspect, the present disclosure provides a swimming pool robot. The swimming pool robot includes: a first body; a second water inlet provided on the first body; a first filtering box at least partially provided in the first body, where the second water inlet is in fluid communication with the first filtering box; and a guiding mechanism provided on the first body. When the guiding mechanism is in an operation state, in a lateral direction of the first body, the guiding mechanism at least partially extends beyond the first body and is configured to guide liquid outside the first body to flow toward the second water inlet and flow into the first filtering box through the second water inlet.

According to a second aspect, the present disclosure provides a method for controlling a swimming pool robot. The swimming pool robot includes: a first body; a first filtering box at least partially provided in the first body; a second water inlet provided on the first body, where the second water inlet is in fluid communication with the first filtering box; and a guiding mechanism provided on the first body. The method includes controlling the guiding mechanism to move from a retracted position to a deployed position. When the guiding mechanism is at the deployed position, the guiding mechanism at least partially extends beyond a lateral edge of the first body and is configured to guide liquid outside the first body to flow toward the second water inlet and flow into the first filtering box.

### BRIEF DESCRIPTION OF THE DRAWINGS

To illustrate the technical solutions in embodiments of the present disclosure more clearly, the following briefly introduces the accompanying drawings needed for describing the embodiments. It is clear that the accompanying drawings in the following descriptions are merely some embodiments of the present disclosure, and a person of ordinary skill in the art may further obtain other accompanying drawings from these accompanying drawings without creative efforts.
FIG. 1 is a schematic cross-sectional diagram of a structure of a cleaning device according to the present disclosure;
FIG. 2A is a schematic cross-sectional diagram of a cleaning device according to an embodiment of the present disclosure;
FIG. 2B is a schematic structural diagram of a cleaning device according to an embodiment of the present disclosure;
FIG. 2C is a schematic structural diagram of a cleaning device according to an embodiment of the present disclosure;
FIG. 3A is a schematic structural diagram of a part of a cleaning device according to an embodiment of the present disclosure;
FIG. 3B is schematic cross-sectional diagram of a cleaning device according to an embodiment of the present disclosure;
FIG. 3C is a schematic structural diagram of a first filtering box cavity, a flow guiding cover, and an electronic control box of the cleaning device in FIG. 3A;
FIG. 3D is a schematic structural diagram of the flow guiding cover and the electronic control box in FIG. 3C;
FIG. 3E is a schematic cross-sectional diagram of a cleaning device according to an embodiment of the present disclosure;
FIG. 4A is a schematic structural diagram of a cleaning device according to the present disclosure;
FIG. 4B is a schematic structural diagram of a cleaning device according to the present disclosure;
FIG. 4C is a schematic diagram of a cleaning device according to the present disclosure after some components are removed;
FIG. 4D is a schematic structural diagram of a lateral section of a cleaning device according to the present disclosure;
FIG. 4E is a schematic structural diagram of a longitudinal section of a cleaning device according to the present disclosure;
FIG. 4F is a schematic structural diagram of a cleaning device according to an embodiment of the present disclosure;
FIG. 4G is a schematic structural diagram of a cleaning device according to an embodiment of the present disclosure;
FIG. 4H is a schematic structural diagram of a cleaning device according to an embodiment of the present disclosure;
FIG. 5A1 is a schematic structural diagram of a cleaning device according to an embodiment of the present disclosure;

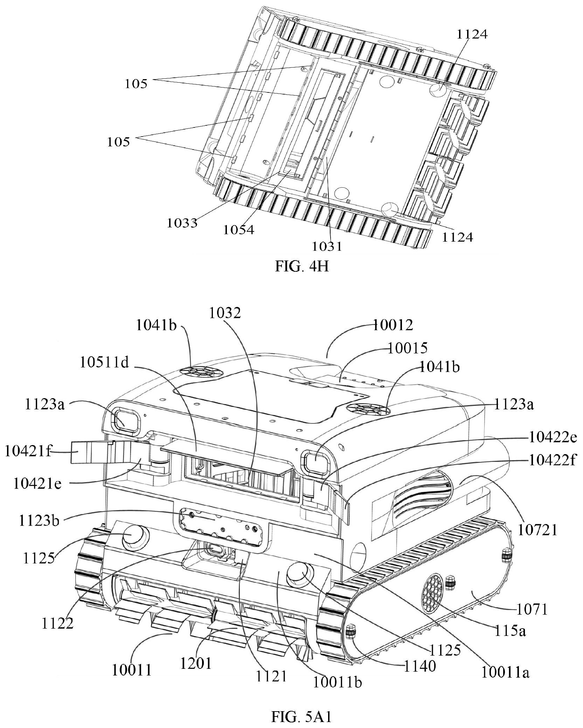

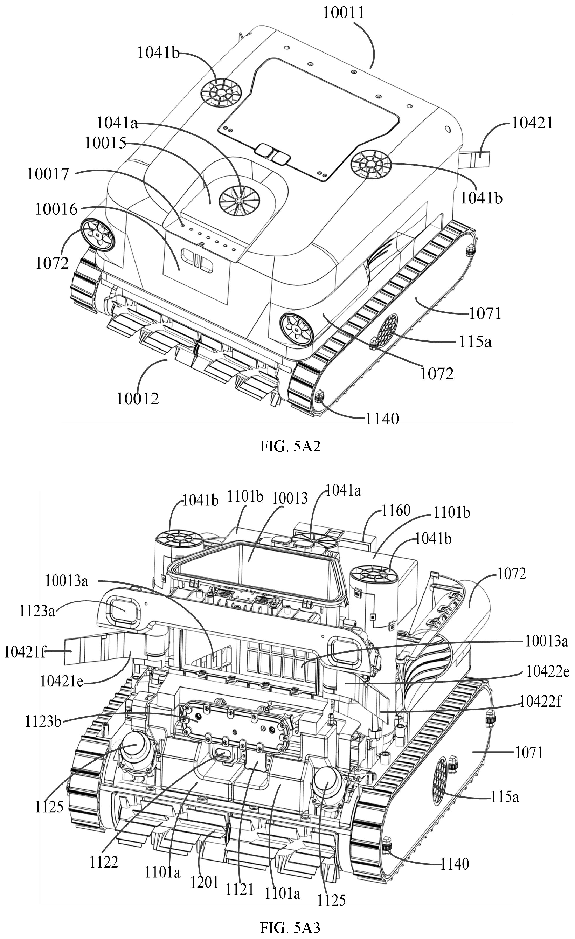

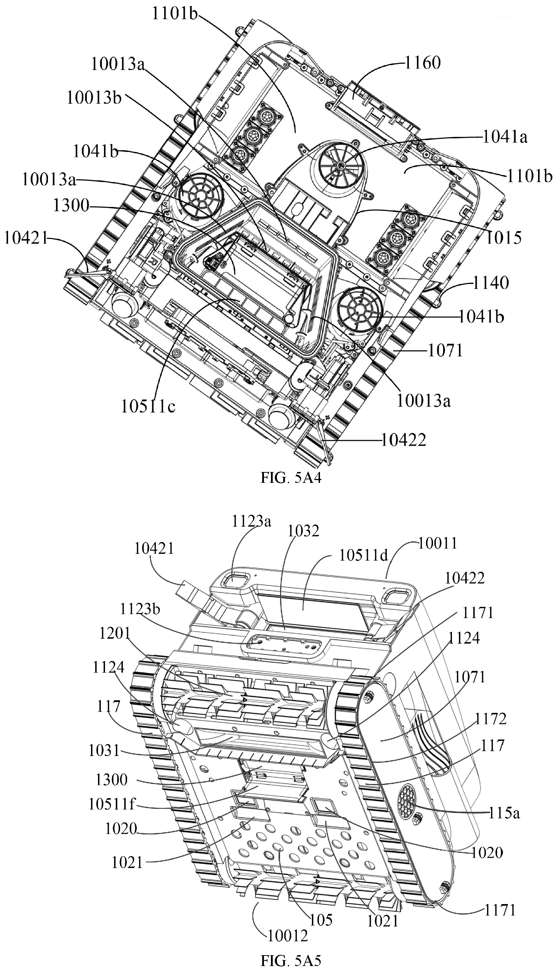

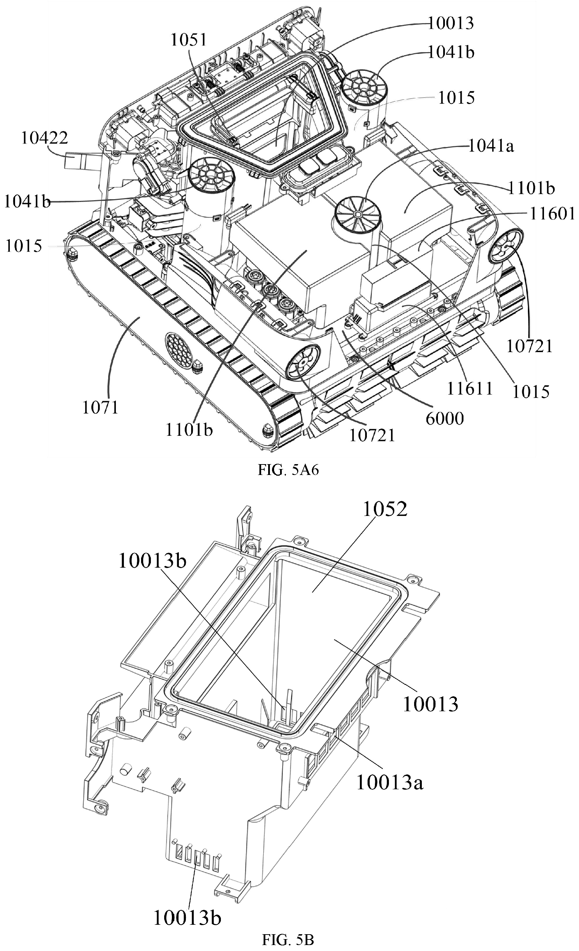

FIG. 5A2 is a schematic structural diagram of the cleaning device in FIG. 5A1;
FIG. 5A3 is a schematic structural diagram of a part of the cleaning device in FIG. 5A1;
FIG. 5A4 is a schematic structural diagram of a part of the cleaning device in FIG. 5A1;
FIG. 5A5 is a schematic structural diagram of the cleaning device in FIG. 5A1;
FIG. 5A6 is a schematic structural diagram of a part of the cleaning device in FIG. 5A1;
FIG. 5B is a schematic structural diagram of a first filtering box cavity according to an embodiment of the present disclosure;

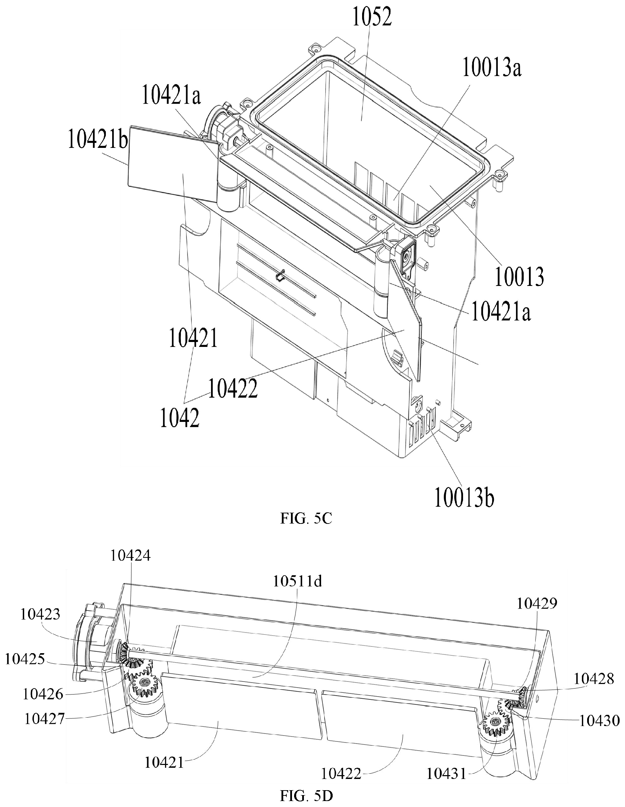

FIG. 5C is a schematic structural diagram of a first guiding mechanism relative to a first filtering box cavity according to an embodiment;
FIG. 5D is a schematic structural diagram of a first guiding mechanism according to an embodiment;

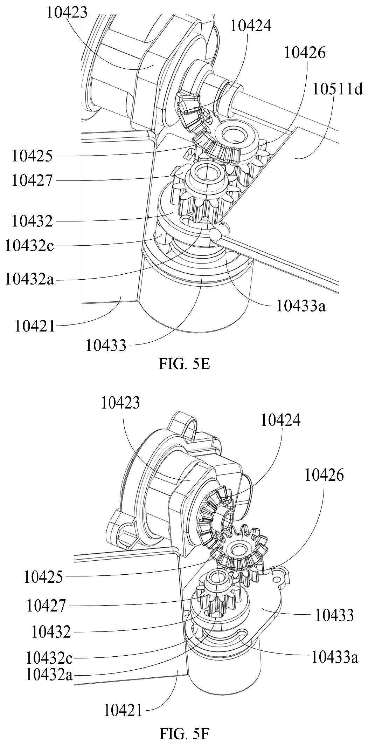

FIG. 5E is a schematic structural diagram of a part of a first guiding mechanism according to an embodiment;
FIG. 5F is a schematic structural diagram of a part of a first guiding mechanism according to an embodiment;

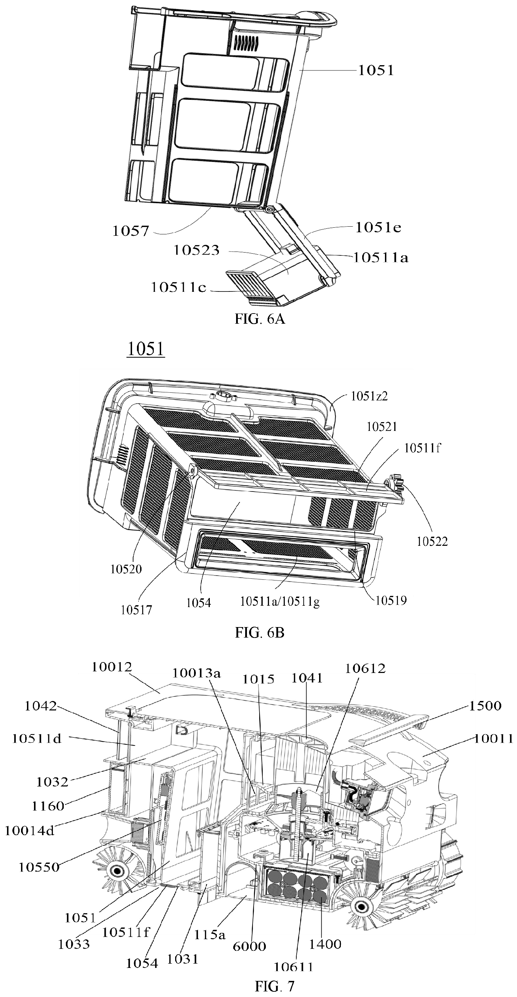

FIG. 6A is a schematic structural diagram of a first filtering box according to an embodiment;
FIG. 6B is a schematic structural diagram of a first filtering box according to another embodiment;
FIG. 7 is a cross-sectional diagram of a cleaning device according to an embodiment of the present disclosure;

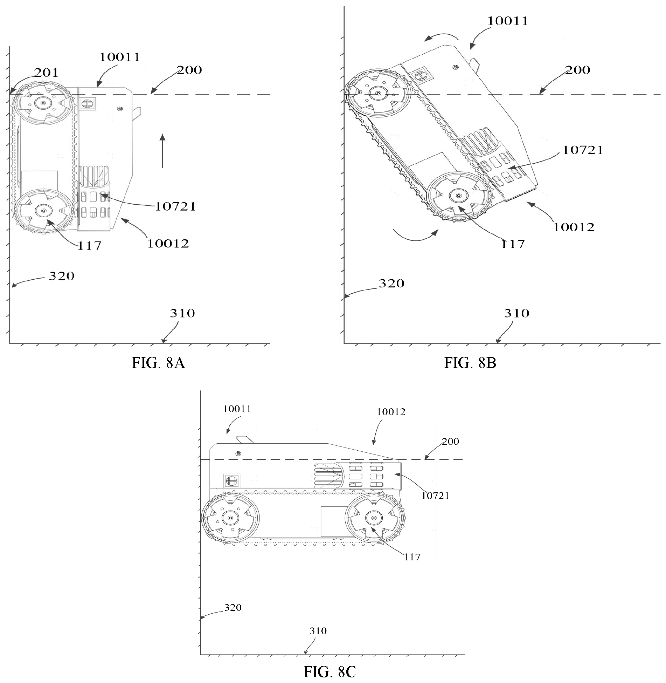

FIG. 8A is a side diagram showing that a cleaning device according to the present disclosure moves to a waterline on a side wall in a process in which the cleaning device is switched from a first motion state to a second motion state and then from the second motion state to a third motion state;
FIG. 8B is a side diagram showing that a cleaning device according to the present disclosure rotates from a second motion state to a third motion state in a process in which the cleaning device is switched from a first motion state to the second motion state and then from the second motion state to the third motion state; and
FIG. 8C is a side diagram of a cleaning device in a third motion state according to the present disclosure.

### DETAILED DESCRIPTION

The present disclosure provides a cleaning system. The cleaning system includes a cleaning device 1000 and a base station. For example, the cleaning device is a swimming pool robot. The swimming pool robot can move at least one of on a water surface of a pool, in water, on a bottom of the pool, or on a wall of the pool. The swimming pool robot can perform a cleaning task in a moving process.

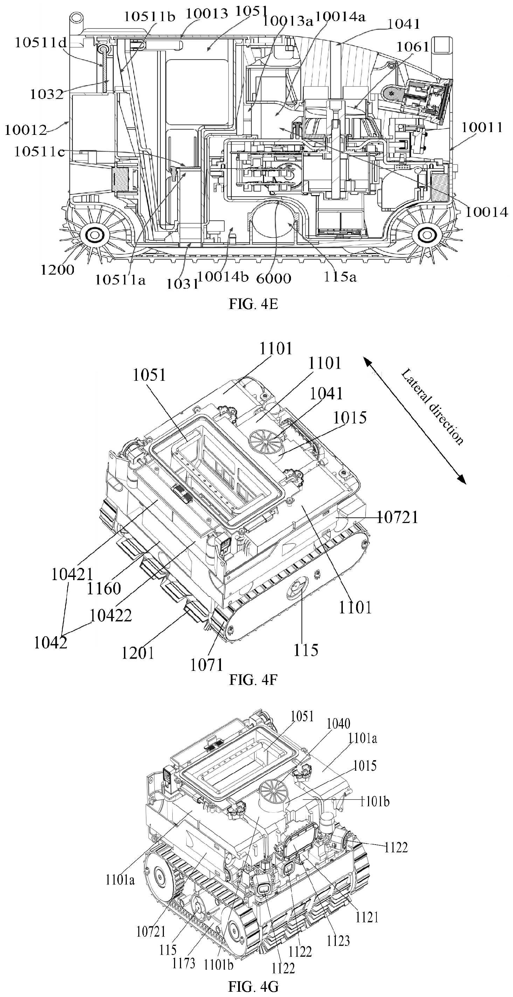

As shown in FIG. 4F, the swimming pool robot includes a first end portion and a second end portion. The first end portion includes a first end portion of a first body, a first end portion of a moving mechanism (mentioned below), and a first cleaning member 1201 (mentioned below) provided between first end portions of two moving mechanisms. In other words, the first body (namely, a cleaning device body) is a housing of the swimming pool robot, and the moving mechanism and the first cleaning member are provided on the housing, but the first cleaning member and a track or a moving wheel of the moving mechanism are exposed outside the first body. One of the first end portion and the second end portion is a front portion 10011 of the swimming pool robot, and the other of the first end portion and the second end portion is a rear portion 10012 of the swimming pool robot. The front portion of the swimming pool robot is in front of the rear portion of the swimming pool robot.

For example, the first body includes a first side wall and a second side wall opposite to each other in a forward direction of the swimming pool robot, a third side wall and a fourth side wall opposite to each other in a lateral direction of the swimming pool robot, and a top wall and a bottom wall opposite to each other in a height direction of the swimming pool robot. For example, one of the first side wall and the second side wall is a front side wall, the other of the first side wall and the second side wall is a rear side wall, one of the third side wall and the fourth side wall is a left side wall, and the other of the third side wall and the fourth side wall is a right side wall. The front portion of the first body includes at least one of the front side wall, a front portion of the left side wall, a front portion of the right side wall, a front portion of the top wall, or a front portion of the bottom wall. The rear portion of the first body at least includes the rear side wall, a rear portion of the left side wall, a rear portion of the right side wall, a rear portion of the top wall, and a rear portion of the bottom wall.

The first body 1001 is provided with at least one liquid inlet portion 1030, at least one first filtering assembly 1050, at least one liquid outlet portion 1040, and at least one suction assembly 1060. The liquid inlet portion 1030 serves as an inlet configured to allow liquid and debris in the pool to enter the first body. The liquid inlet portion 1030 may be provided at a bottom and/or a side portion of the first body 1001, enabling the swimming pool robot to perform at least one of the following cleaning tasks: bottom cleaning, wall cleaning, waterline cleaning, water surface cleaning, or the like. The first filtering assembly at least includes a first filtering box (also referred to as a first dust box). The first filtering box is configured to filter debris-loaded water entering the first body. The debris-loaded water refers to water carrying debris in the pool, for example, leaves, sand, stains, or suspended substances. Under a suction force generated by the suction assembly, the debris-loaded water in the pool is sucked into the first filtering box through the liquid inlet portion and then is filtered by the first filtering box, so that debris remains in the first filtering box, and water is discharged from the first body through the liquid outlet portion 1040.

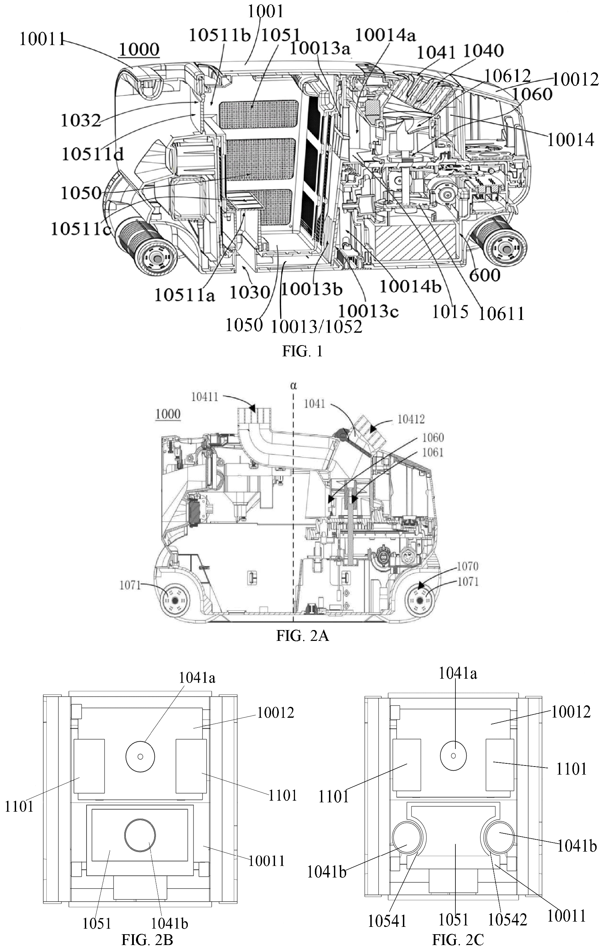

In some embodiments, as shown in FIG. 1, the first body 1001 includes a first accommodating cavity 10013, and the first filtering box 1051 is at least partially provided in the first accommodating cavity, so that the first filtering box is provided in the first body.

In some embodiments, the liquid inlet portion at least includes a first water inlet. The first water inlet is provided on the first body and is in fluid communication with the first filtering box. For example, as shown in FIG. 1, the first water inlet is provided at the bottom of the first body. In one embodiment, the first water inlet is located on the bottom of the first body and is closer to the front side wall than to the rear side wall. When the swimming pool robot cleans the bottom 310 or the wall 320 of the pool, the swimming pool robot preferentially moves forward to clean the bottom or the wall of the pool, or the swimming pool robot moves backward to clean the bottom or the wall of the pool. In another embodiment, the first water inlet is located on the bottom of the first body and is closer to the rear side wall than to the front side wall. When the swimming pool robot cleans the bottom or the wall of the pool, the swimming pool robot preferentially moves backward to clean the bottom or the wall of the pool, or the swimming pool robot moves forward to clean the bottom or the wall of the pool.

In some embodiments, as shown in FIG. 1, the first filtering box is provided with a first inlet 10511a, and the first water inlet is in fluid communication with the first inlet 10511a, so that the first water inlet is in fluid communication with the first filtering box. The first water inlet may be directly in fluid communication with the first inlet to shorten a path for water in the pool to enter the first filtering box through the first water inlet and the first inlet. For example, the first water inlet is provided at the bottom of the first body, the first inlet is provided at a bottom of the first filtering box, and the first water inlet is adjacent to and in fluid communication with the first inlet, or the first water inlet is indirectly in fluid communication with the first inlet. For example, the first water inlet is in fluid communication with the first inlet through a duct.

In some embodiments, the liquid outlet portion 1040 at least includes a first water outlet 1041 provided on the first body 1001. For example, as shown in FIG. 1, the first water outlet is provided at the top of the first body. For example, the first water outlet is provided on the top wall of the first body and is closer to the rear side wall than to the front side wall. Alternatively, the first water outlet is provided on a side portion of the first body. For example, the first water outlet is provided on at least one of the third side wall or the fourth side wall. Alternatively, the first water outlet is provided on the rear portion of the first body. For example, the first water outlet is provided on the rear side wall of the first body.

The first water inlet, the first filtering box, the suction assembly, and the first water outlet are sequentially in fluid communication to form a first water flow path for cleaning the bottom, the wall, or the waterline of the pool. Specifically, under the action of the suction assembly, the debris-loaded water in the pool enters the first filtering box through the first water inlet and then is filtered by the first filtering box, so that the debris remains in the first filtering box, and the filtered water enters the first accommodating cavity, then passes through the suction assembly, and is finally discharged from the first body through the first water outlet.

In another embodiment, when the swimming pool robot further has a water surface cleaning function, as shown in FIG. 1, the liquid inlet portion further includes a second water inlet 1032. The second water inlet is provided on the first end portion or a second end portion of the first body, and the second water inlet is in fluid communication with a first filtering box to guide liquid on the water surface to flow into the first filtering box. The second water inlet 1032, the first filtering box 1051, the suction assembly 1060, and the first water outlet 1041 are sequentially in fluid communication to form a second water flow path for cleaning the water surface and the waterline. Specifically, under a suction action of the suction assembly, the second water inlet 1032 is at least partially located below the water surface and close to the water surface, and the debris-loaded water in the pool enters the first filtering box through the second water inlet and then is filtered by the first filtering box, so that the debris remains in the first filtering box, and the filtered water enters the first accommodating cavity, then passes through the suction assembly, and is finally discharged from the first body through the first water outlet.

In some embodiments, as shown in FIG. 1, FIG. 3B, or FIG. 5A1, the second water inlet 1032 is provided on a front portion of the first body 1001, and when the cleaning device performs water surface cleaning, the cleaning device moves forward to clean the water surface. For example, the second water inlet is provided on the front side wall of the first body and is closer to the top of the first body than to the bottom of the first body.

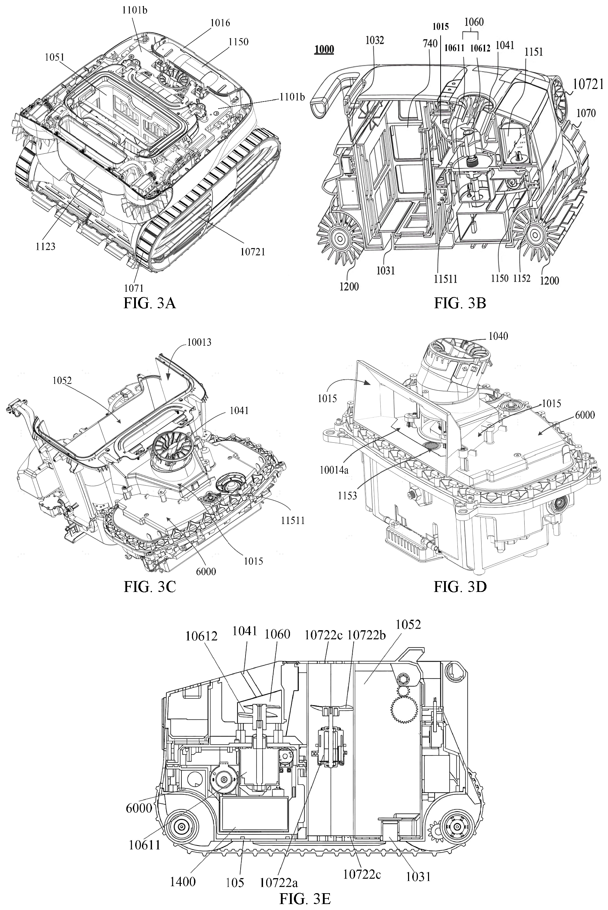

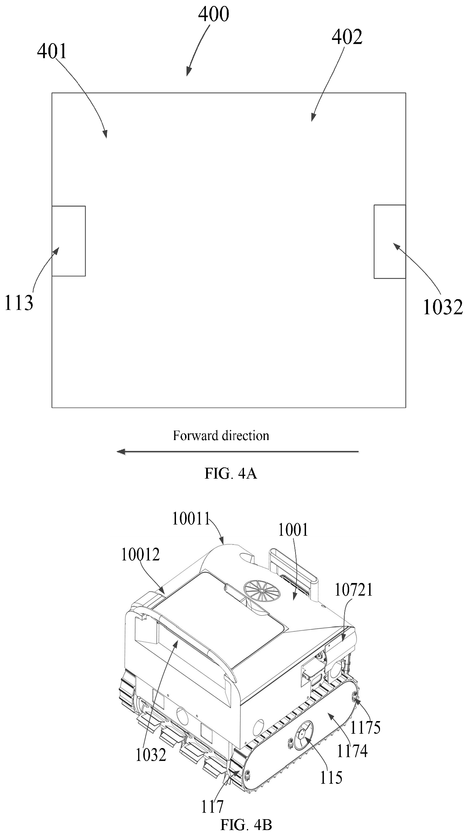

For another example, as shown in FIG. 3B, FIG. 4A, and FIG. 4B, the second water inlet is provided on a rear portion of the first body, and when the cleaning device performs water surface cleaning, the cleaning device moves backward to clean the water surface. For example, the second water inlet is provided on the rear side wall of the first body and is closer to the top of the first body than to the bottom of the first body.

In some embodiments, as shown in FIG. 1 or FIG. 5A5, the first water inlet is provided at the bottom of the first body, and the second water inlet is provided on the front side wall of the first body. In this case, the cleaning device moves forward to clean the bottom and the water surface of the pool. In another embodiment, as shown in FIG. 4E, the first water inlet is provided at the bottom of the first body, and the second water inlet is provided on the rear side wall of the rear portion of the first body. In this case, the cleaning device moves forward to clean the bottom of the pool and moves backward to clean the water surface of the pool.

In another embodiment, the first filtering box is provided with a second inlet 10511b, and the second water inlet is in fluid communication with the second inlet, so that the second water inlet is in fluid communication with the first filtering box. The second water inlet may be directly in fluid communication with the second inlet 10511b to shorten a path for water in the pool to enter the first filtering box through the second water inlet and the second inlet 10511b. For example, the second water inlet is adjacent to or aligned with the second inlet. For example, a bottom surface of the second water inlet is adjacent to and substantially flush with a bottom surface of the second inlet. Alternatively, the second water inlet is provided on the front side wall of the front portion of the first body, the second inlet is provided on a front side wall of the first filtering box, the second water inlet is provided outside the second inlet, the second water inlet is adjacent to the second inlet, and a bottom surface of the second water inlet is substantially flush with a bottom surface of the second inlet. The second inlet may be a complete opening or hole, an open inlet, or an aperture at the top of the front side wall of the first filtering box. Alternatively, the second water inlet is indirectly in fluid communication with the second inlet, so that the water in the pool can also enter the first filtering box through the second water inlet. For example, the second water inlet is in fluid communication with the second inlet through a duct.

For a first type of swimming pool robot, the liquid inlet portion includes the first water inlet and does not include the second water inlet. The swimming pool robot can only be configured to clean the bottom, the wall, and the waterline of the pool. In other words, the first type of swimming pool robot has an underwater cleaning function and does not have a water surface cleaning function. For a second type of swimming pool robot, the liquid inlet portion includes the first water inlet and the second water inlet. The swimming pool robot is configured to clean the bottom, the wall, the waterline, and the water surface of the pool. In other words, the second type of swimming pool robot has an underwater cleaning function and a water surface cleaning function. For a third type of swimming pool robot, the liquid inlet portion includes the second water inlet and is not provided with the first water inlet. The swimming pool robot is configured to clean the water surface and the waterline of the pool. In other words, the third type of swimming pool robot has a water surface cleaning function and does not have an underwater cleaning function. Underwater cleaning at least includes waterline cleaning performed by the swimming pool robot when the swimming pool robot moves horizontally or vertically on the wall of the pool, pool bottom cleaning, and pool wall cleaning. Water surface cleaning at least includes waterline cleaning performed by the swimming pool robot when the swimming pool robot moves on the water surface and water surface cleaning.

In another embodiment, as shown in FIG. 1 or FIG. 4E, the first body 1001 further includes a second accommodating cavity 10014. The second accommodating cavity includes a first sub-cavity 10014a and a second sub-cavity 10014b. The first sub-cavity is separated from the second sub-cavity. A second liquid discharge opening 10013a is provided on a side wall of the first accommodating cavity, enabling the first accommodating cavity to be in fluid communication with the first sub-cavity. The first water outlet 1041 is provided on the first body and is in fluid communication with the first sub-cavity. The suction assembly 1060 at least includes a main water pump 1061. A main impeller of the main water pump is provided in the first sub-cavity 10014a, and a main motor of the main water pump is provided in the second sub-cavity 10014b, so that the first water inlet, the first filtering box, the second liquid discharge opening, the first sub-cavity, and the first water outlet on the first body are sequentially in fluid communication to form the first water flow path, and the second water inlet, the first filtering box, the second liquid discharge opening, the first sub-cavity, and the first water outlet are sequentially in fluid communication to form the second water flow path.

In some embodiments, as shown in FIG. 4E, a first baffle plate 10511c is provided over at least one of the first water inlet 1031, the first inlet 10511a, or a first flow sub-channel formed between the first water inlet and the first inlet. The first baffle plate is in a closed state to prevent the liquid in the pool from entering the first filtering box through the first water inlet 1031, and the first baffle plate is in an open state to allow the liquid in the pool to enter the first filtering box through the first water inlet.

In another embodiment, a second baffle plate 10511d is provided over at least one of the second water inlet, the second inlet 10511b, or a second flow sub-channel formed between the second water inlet and the second inlet. The second baffle plate is in a closed state to prevent the liquid from entering the first filtering box through the second water inlet, and the second baffle plate is in an open state to allow the liquid in the pool to enter the first filtering box through the second water inlet.

In another embodiment, the third type of swimming pool robot is provided with the first baffle plate and the second baffle plate. When the swimming pool robot performs water surface cleaning, the first baffle plate is in the closed state to prevent the liquid in the pool from entering the first filtering box through the first water inlet 1031, and the second baffle plate is in the open state to allow the liquid to enter the first filtering box through the second water inlet and the second inlet. When the cleaning device moves in the water or cleans the bottom wall or the wall of the pool, the second baffle plate is in the closed state to prevent the liquid from entering the first filtering box through the second water inlet, and the first baffle plate is in the open state to allow the liquid to enter the first filtering box through the first water inlet 1031 and the first inlet. In other words, when the water surface is cleaned, the first baffle plate is in the closed state, and the second baffle plate is in the open state, and when the wall or the bottom of the pool is cleaned, the first baffle plate is in the open state, and the second baffle plate is in the closed state. In other words, the first water flow path operates normally, and the second water flow path temporarily stops operating.

In some embodiments, as shown in FIG. 1, the first body 1001 includes the first accommodating cavity 10013 and the second accommodating cavity 10014. The first filtering assembly 1050 is provided in the first accommodating cavity. The second accommodating cavity includes the first sub-cavity 10014a and the second sub-cavity 10014b. The first sub-cavity is separated from the second sub-cavity. The suction assembly 1060 is provided in the first sub-cavity. A first electronic control box 6000 (mentioned below) is provided in the second sub-cavity. Certainly, other components may be provided in the first sub-cavity and the second sub-cavity. The second liquid discharge opening 10013a is provided on a side wall of the first accommodating cavity, enabling the first accommodating cavity to be in fluid communication with the first sub-cavity. The first water outlet 1041 is provided on the first body and is in fluid communication with the first sub-cavity. The suction assembly 1060 includes a main water pump 1061. A main impeller 10612 of the main water pump is provided in the first sub-cavity 10014a, and a main motor 10611 of the main water pump is provided in the second sub-cavity 10014b, so that the first water inlet, the first filtering assembly, the second liquid discharge opening, the first sub-cavity, and the first water outlet on the first body are sequentially in fluid communication to form the first water flow path, and the second water inlet, the first filtering assembly, the second liquid discharge opening, the first sub-cavity, and the first water outlet are sequentially in fluid communication to form the second water flow path.

In some embodiments, the first filtering assembly 1050 includes the first filtering box 1051. For example, the first filtering box 1051 includes a first frame 1051f and a first filtering mesh 1051g provided on the first frame. The first frame includes a plurality of side walls and a first bottom plate 10517. At least one side wall is provided with a first filtering mesh to form a filtering surface. The plurality of side walls are connected end to end in a detachable or non-detachable manner. The first frame and the first filtering mesh form filtering space to filter liquid entering the first filtering box. In other words, the first bottom plate serves as the bottom of the first filtering box.

In some embodiments, a bottom opening 1057 is provided at the bottom of the first filtering box and configured to allow debris in the first filtering box to be discharged from the first filtering box. The first filtering box further includes a first bottom cover, and the first bottom cover is configured to cover the bottom opening or be opened to expose the bottom opening.

In some embodiments, the first bottom cover serves as the first bottom plate. As shown in FIG. 6A, the first bottom plate 10517 is configured to cover the bottom opening 1057 or be opened to expose the bottom opening 1057. In this embodiment, the whole bottom of the first filtering box serves as the bottom opening to form a large-sized opening, so that large-sized debris in the first filtering box can be discharged from the first filtering box through the bottom opening, and a speed at which the debris in the first filtering box is discharged through the bottom opening can also be improved.

In some embodiments, the first bottom plate rotates to cover the bottom opening 1057 or be opened to expose the bottom opening 1057. Alternatively, in another embodiment, the first bottom plate is provided at the bottom of the first filtering box in a translation manner, and the first bottom plate translates to cover the bottom opening 1057 or be opened to expose the bottom opening 1057.

In some embodiments, as shown in FIG. 6A, the first bottom plate is provided with a fifth opening 10511g (namely, the first inlet). Further, in some embodiments, as shown in FIG. 6A, the first filtering box further includes a first protrusion 10523. The first protrusion 10523 is provided at the fifth opening 10511g. The first protrusion extends from the bottom of the first filtering box toward the interior of the first filtering box. The first protrusion 10523 is hollow and is in fluid communication with the fifth opening 10511g. The first bottom plate drives the first protrusion to move. In some embodiments, the first baffle plate is provided over the first protrusion.

Alternatively, in some embodiments, the first bottom cover serves as a fifth baffle plate. As shown in FIG. 6B and FIG. 5A5, the first bottom plate is provided with a sixth opening (namely, the bottom opening), and the first filtering box further includes the fifth baffle plate 10511f. The fifth baffle plate is configured to cover the sixth opening or be opened to expose the sixth opening. The sixth opening is configured to allow debris in the first filtering box to be discharged from the first filtering box. For example, the fifth baffle plate rotates or translates to cover the sixth opening or be opened to expose the sixth opening. In some embodiments, as shown in FIG. 6B, the first bottom plate is provided with the fifth opening. The fifth opening and the sixth opening are provided on the first bottom plate in a staggered manner.

Further, in some embodiments, the first filtering box further includes a first protrusion 10523. The first protrusion 10523 is provided at the fifth opening 10511g. The first protrusion extends from the bottom of the first filtering box toward the interior of the first filtering box. The first protrusion 10523 is hollow and is in fluid communication with the fifth opening. In this embodiment, the fifth opening and the sixth opening are provided on the first bottom plate in a staggered manner, the first protrusion is provided at the fifth opening, and the fifth baffle plate is configured to cover the sixth opening or be opened to expose the sixth opening. Therefore, the fifth opening and the first protrusion do not move with the fifth baffle plate.

If the first filtering box is provided with the bottom opening, when the swimming pool robot cleans the swimming pool, the first bottom cover covers the bottom opening. When the swimming pool robot returns to the base station, liquid is sprayed out through a nozzle of the base station to the first filtering box to clean the first filtering box, and after or in a process of cleaning the first filtering box, the first bottom cover is opened to expose the bottom opening, enabling the debris in the first filtering box to be discharged from the first filtering box.

In some embodiments, as shown in FIG. 4H and FIG. 5A4, a seventh opening 1033 and the first water inlet 1031 are provided at the bottom of the first body. The first water inlet and the seventh opening are provided in a staggered manner. When the first bottom cover is opened to expose the bottom opening 1054 (namely, a self-cleaning debris discharge opening 1300), the bottom opening is in fluid communication with the seventh opening, enabling the debris in the first filtering box to be discharged from the first body. Alternatively, in some other embodiments, the first water inlet and the seventh opening jointly serve as one eighth opening. In some embodiments, the seventh opening or the eighth opening is provided, so that the bottom opening is exposed to the outside, enabling the debris in the first filtering box to be conveniently discharged from the first body. In some embodiments, the bottom opening is flush with or lower than the seventh opening or the eighth opening. In this case, the debris in the first filtering box is discharged from the first body through the bottom opening. Alternatively, in some embodiments, the bottom opening is higher than the seventh opening or the eighth opening. In this case, the debris in the first filtering box is discharged from the first body through the bottom opening, the seventh opening, or the eighth opening.

In some embodiments, the swimming pool robot includes a movement propulsion mechanism 1070. The movement propulsion mechanism at least includes two moving mechanisms 1071 and a propulsion mechanism 1072. Each moving mechanism 1071 is provided at the bottom or a side portion of the first body 1001. The moving mechanism 1071 is configured to drive the cleaning device 1000 to move on a to-be-cleaned surface. The propulsion mechanism 1072 is at least configured to drive the cleaning device 1000 to move in water or on the water surface.

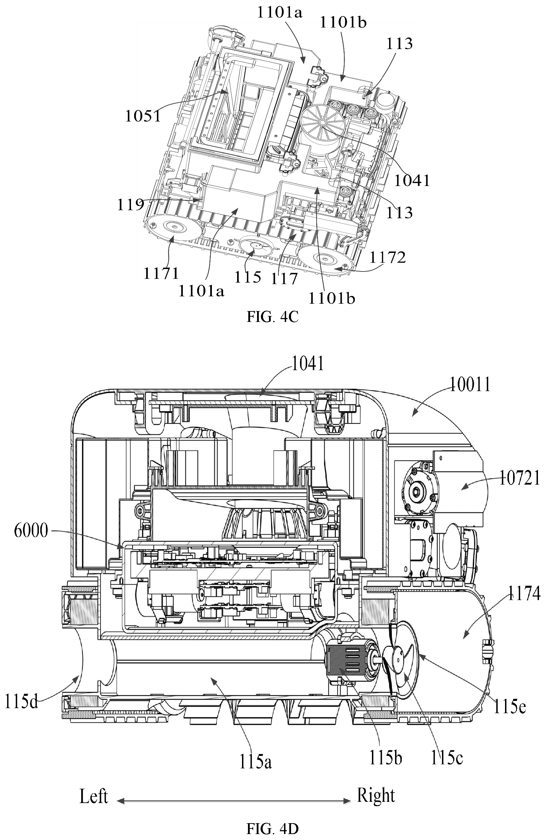

In one embodiment, the moving mechanism 1071 may include at least two moving wheels and at least one fourth motor configured to drive the moving wheels to move. For example, there are two moving wheels, and the two moving wheels are symmetrically provided on the first body. Alternatively, as shown in FIG. 4C, the moving mechanism 1071 includes a first moving wheel 1171, a second moving wheel 1172, and a track 117 wrapped around peripheries of the first moving wheel and the second moving wheel. A region 1173 is formed between an inner side wall of the track and the two moving wheels. There are two moving mechanisms, and the two moving mechanisms are symmetrically provided on two opposite side portions of the first body. The moving mechanism further includes the fourth motor. The fourth motor is configured to drive one of the first moving wheel and the second moving wheel to rotate, and the track drives the other moving wheel to rotate.

The propulsion mechanism 1072 is at least configured to drive the cleaning device 1000 to move in water or on the water surface. In one embodiment, the propulsion mechanism 1072 includes at least one first propeller 10721. The first propeller 10721 is configured to drive liquid to move in a first preset direction. When the liquid moves in the first preset direction, a first driving force is applied to the cleaning device in a horizontal direction. A direction of the first driving force is opposite to the first preset direction. The first propeller 10721 is provided, so that a position of the cleaning device 1000 can be switched in the horizontal direction. For example, the cleaning device moves straight or makes a turn on the water surface in the horizontal direction, so that the cleaning device can clean the water surface of the swimming pool.

In some embodiments, the first propeller includes a fifth motor and a first impeller. The fifth motor drives the first impeller to rotate to drive liquid to flow out through a propeller liquid outlet to generate the first driving force. The first propeller further includes a first flow channel. Two ends of the first flow channel respectively serve as a propeller liquid inlet and the propeller liquid outlet. For ease of expression, the propeller liquid inlet is expressed as a first sub-opening, and the propeller liquid outlet is expressed as a second sub-opening. The fifth motor and the first impeller are provided in the first flow channel. When liquid flows into the first flow channel through the first sub-opening, the first impeller rotates to drive the liquid to be sprayed out through the second sub-opening. The sprayed liquid applies the first driving force to the swimming pool robot, and the direction of the first driving force is opposite to a direction in which the liquid is sprayed out through the second sub-opening, so that the swimming pool robot is driven to move on the water surface.

In one embodiment, as shown in FIG. 5A6, there are two first propellers 10721. The two first propellers 10721 are symmetrically provided on two side portions of the cleaning device. A speed difference between the two first propellers is changed, so that the swimming pool robot performs steering or makes a turn.

In one embodiment, the second water inlet 1032 of the cleaning device is provided at the front portion of the cleaning device, and the second water inlet 1032 is used for water surface cleaning. In this case, the two first propellers 10721 are provided on two sides of the rear portion of the cleaning device. When the first propeller 10721 is turned on, liquid in the pool enters the first propeller 10721 and then is sprayed out backward through the propeller liquid outlet at a rear portion of the first propeller 10721. The sprayed liquid applies the forward first driving force to the cleaning device. The first driving force drives the cleaning device to move forward, so that the cleaning device can move forward on the water surface.

In other words, the first sub-opening is closer to the front side wall of the first body than the second sub-opening, and the second sub-opening is closer to the rear side wall of the first body than the first sub-opening. The liquid in the pool enters the first flow channel through the first sub-opening and is discharged backward through the second sub-opening after passing through the impeller. The discharged liquid applies the forward first driving force to the first body to drive the swimming pool robot to move forward. In a process in which the swimming pool robot moves forward, the suction assembly drives liquid on the water surface to sequentially flow through the second water inlet 1032, the second inlet of the first filtering box 1051, the first filtering box, and the suction assembly and be finally discharged from the cleaning device through the first water outlet 1041 provided on the cleaning device body, to form the second water flow path for the cleaning device to perform cleaning. In other words, the cleaning device moves forward to clean the water surface.

In another embodiment, because the second water inlet 1032 is provided on the rear side surface of the rear portion of the cleaning device, the two first propellers 10721 are provided on two sides of the front portion of the first body, so that the cleaning device can move on the water surface. In this way, when the cleaning device moves backward on the water surface, liquid is sprayed out forward through the propeller liquid outlet at a front portion of the first propeller 10721 to apply the backward first driving force to the cleaning device, so that the cleaning device can move backward. In this way, liquid on the water surface sequentially flows through the second water inlet 1032, the second inlet of the first filtering box 1051, the first filtering box, and the suction assembly and is finally discharged from the cleaning device through the first water outlet 1041 provided on the cleaning device body, to form the second water flow path for the cleaning device to perform cleaning. In other words, the cleaning device moves backward to clean the water surface. In other words, the first sub-opening is closer to the rear side wall of the first body than the second sub-opening, and the second sub-opening is closer to the front side wall of the first body than the first sub-opening. The liquid in the pool enters the first flow channel through the first sub-opening and is discharged forward through the second sub-opening after passing through the impeller. The discharged liquid applies the backward first driving force to the first body to drive the swimming pool robot to move backward.

In some embodiments, as shown in FIG. 5A6, the two first propellers 10721 are provided on two sides of the cleaning device and above the tracks of the moving mechanisms. In one embodiment, when the cleaning device is located on a horizontal surface, projections of the two first propellers 10721 on the horizontal surface fall within a seventh region formed between projections of outermost edges of the tracks of the two moving mechanisms on the horizontal surface, so that in a lateral direction of the cleaning device, at least a portion of each track at the lower portion of the cleaning device extends beyond an outermost edge of each first propeller 10721.

In another embodiment, as shown in FIG. 4B, the moving mechanism further includes an outer cover plate 1174. The outer cover plate is provided on the first body and blocks the first moving wheel and the second moving wheel to prevent the moving wheels from being exposed, to protect the moving wheels. An area of the outer cover plate is substantially equal to an area of the region 1173, so that the outer cover plate can block the moving wheels without affecting normal operation of the track. In one embodiment, an outer wall of the outer cover plate 1174 is provided with at least one anti-collision part 1140. When the cleaning device moves along the waterline, because the anti-collision part protrudes from an outer side wall of the outer cover plate, the anti-collision part 1140 hits a side wall of the pool before a side wall of the cleaning device to prevent the side wall of the cleaning device from directly hitting the side wall of the pool, to protect and cushion the side wall of the cleaning device.

In some embodiments, as shown in FIG. 4C, the propulsion mechanism further includes a lateral propulsion assembly 115. The lateral propulsion assembly 115 may be provided at a side portion, the top, or the bottom of the first body 1001 and includes a fluid inlet and a fluid spraying outlet. Liquid enters the lateral propulsion assembly through the fluid inlet and is sprayed out through the fluid spraying outlet in a direction away from the side portion of the first body. The sprayed water applies a second thrust to the cleaning device. The second thrust may at least provide a thrust component in the lateral direction of the cleaning device for the cleaning device 1000, so that when the cleaning device 1000 moves on the water surface along the side wall of the pool, the cleaning device can be attached to the side wall of the pool, when the cleaning device is located on the wall of the pool, the cleaning device can laterally move along the waterline and clean the waterline, and when the cleaning device moves on the bottom of the pool along an edge of the bottom of the pool, the cleaning device can be attached to the side wall of the pool and clean the bottom of the pool along the edge. In addition, the cleaning device can be driven to laterally move on the water surface, in water, on the bottom of the pool, and on the wall of the pool, enabling a position of the cleaning device to be adjusted, so that the cleaning device can return from any position on the water surface or the wall of the pool to the carrying surface of the base station. The lateral direction may be defined as a direction of a connection line of centers of a left side and a right side of the cleaning device 1000. The cleaning device usually has a left edge-moving mode and/or right edge-moving mode. The left edge-moving mode means that an edge of the left side of the cleaning device is close to or attached to an edge of a target region (for example, a pool). The right edge-moving mode means that an edge of the right side of the cleaning device is close to or attached to the edge of the target region.

In some embodiments, the lateral propulsion assembly 115 runs through two side surfaces of the cleaning device. One side surface is provided with a first opening 115d, and the other side surface is provided with a second opening 115e. A lateral flow channel is formed by the two side surfaces, the first opening, and the second opening.

For example, as shown in FIG. 4D, the lateral propulsion assembly 115 includes the lateral flow channel 115a laterally provided on the first body. Two ends of the lateral flow channel 115a run through two side walls of the first body that are arranged in the lateral direction, and are in fluid communication with the outside. Ports of the two ends of the lateral flow channel 115a respectively serve as the first opening 115d and the second opening 115e. One of the first opening 115d and the second opening 115e serves as the fluid inlet, and the other of the first opening 115d and the second opening 115e serves as the fluid spraying outlet. The lateral propulsion assembly further includes a lateral impeller 115c and a lateral motor 115b configured to drive the lateral impeller 115c to rotate. Both the lateral impeller 115c and the lateral motor 115b are provided in the lateral flow channel 115a.

For example, the first opening is located on the left side of the first body, and the second opening is located on the right side of the first body. When the lateral motor rotates in a forward direction, the first opening serves as the fluid inlet, and the second opening serves as the fluid spraying opening. In a process in which the lateral motor drives the impeller to rotate, liquid enters the first opening and is sprayed out rightward through the second opening to apply a leftward second thrust to the cleaning device. Under the second thrust, the cleaning device can move along a left edge or laterally move leftward. For example, a rotation direction of the lateral motor 115b is changed, so that when the lateral motor 115b rotates in a reverse direction, the first opening serves as the fluid spraying outlet, and the second opening serves as the fluid inlet. In this way, liquid is sprayed out leftward through the first opening to apply a rightward second thrust to the cleaning device. Under the second thrust, the cleaning device can move along a right edge or laterally move rightward. In this way, a lateral position of the swimming pool robot on the water surface, in the water, on the wall of the pool, and/or on the bottom of the pool can be adjusted.

In some embodiments, the first opening and/or the second opening are/is located within a range of the moving mechanism in the height direction of the cleaning device. For example, as shown in FIG. 4G, the two ends of the lateral flow channel are respectively located in regions 1173 of the two moving mechanisms without occupying other regions on the first body, so that the cleaning device can move along an edge with a more compact structure and a smaller size. If the outer cover plate is provided, the outer cover plate is provided with an avoidance hole or an avoidance grille configured to allow the first opening and the second opening to be exposed, so that the two ends of the lateral flow channel are in communication with liquid in the pool.

In some embodiments, the lateral propulsion assembly 115 is located below the first electronic control box 6000 and in the second sub-cavity, leading to a compact structure of the cleaning device. Because the first sub-cavity and the second sub-cavity are separated, when the first water inlet 1031 is opened, the lateral propulsion assembly is turned on without affecting an amount of water entering the first water inlet 1031. Certainly, the lateral propulsion assembly may alternatively be provided at another position on the cleaning device.

In some embodiments, the third type of swimming pool robot further includes a floating-submerging mechanism, namely, the mode switching member 1100, so that the swimming pool robot can float up and submerge. The mode switching member 1100 is configured to allow the cleaning device 1000 to be switched between a pose (namely, a position and a posture) on the water surface 200 and a pose under the water surface 200, enabling the cleaning device 1000 to be flexibly switched between the pose on the water surface 200 and the pose under the water surface 200. The swimming pool robot has a first motion state, a second motion state, and a third motion state. The first motion state is a state in which the cleaning device is located on a bottom wall of the pool. For example, the cleaning device moves on or stops on the bottom wall of the pool. The second motion state is a state in which the cleaning device is located on a side wall of the pool. For example, the cleaning device moves on or stops on the side wall of the pool. The third motion state is a state in which the cleaning device floats on the water surface of the pool. For example, the cleaning device moves on or stops on the water surface. For example, when the cleaning device is in the third motion state, the cleaning device is substantially parallel to the water surface or is in a substantially horizontal state, and the cleaning device is at least partially located above the water surface. When the cleaning device is in the first motion state, the cleaning device is also in the substantially horizontal state. In other words, no matter whether when the cleaning device is in the first motion state or when the cleaning device is in the third motion state, the cleaning device is in the substantially horizontal state, the top of the cleaning device faces upward, and the bottom of the cleaning device faces downward.

The mode switching member 1100 is configured to allow the cleaning device to be directly switched between the second motion state and the third motion state or between the first motion state and the third motion state.

In one embodiment, the floating-submerging mechanism 1100 includes a buoyancy cavity 1101, a first adjustment member, at least one first injection opening 113, and at least one discharge opening. The buoyancy cavity 1101 is rigid, and the buoyancy cavity 1101 is configured to accommodate gas and/or liquid. The first adjustment member is configured to adjust a volume of the gas and/or the liquid in the buoyancy cavity 1101. The first injection opening 113 is in fluid communication with the buoyancy cavity 1101 and is configured to allow external gas to enter the buoyancy cavity and allow gas in the buoyancy cavity to be discharged from the buoyancy cavity. The discharge opening is in fluid communication with the buoyancy cavity and is configured to allow liquid outside the buoyancy cavity to enter the buoyancy cavity and allow liquid in the buoyancy cavity to be discharged from the buoyancy cavity.

For example, the first adjustment member is a pump. When the cleaning device 1000 is in the third motion state, the pump drives the gas in the buoyancy cavity 1101 to be discharged through the first injection opening 113, and pressure in the buoyancy cavity is reduced to form negative pressure. The negative pressure drives liquid to be input into the buoyancy cavity 1101 through the discharge opening. Therefore, when the gas is discharged, and the liquid is input, a weight of the buoyancy cavity 1101 is increased, and gravity of the cleaning device is greater than the buoyancy force applied to the cleaning device 1000, enabling the cleaning device 1000 to be switched from the third motion state to the second motion state or the first motion state, so that the cleaning device 1000 can be switched from the pose on the water surface 200 to the pose under the water surface 200. If the cleaning device 1000 is in the second motion state, when the first injection opening is located above the water surface, the pump drives gas to be input through the first injection opening 113 and also drives liquid in the buoyancy cavity 1101 to be discharged through the discharge opening. Therefore, when the gas is input, and the liquid is discharged, the weight of the buoyancy cavity 1101 is reduced, and the gravity of the cleaning device is less than the buoyancy force applied to the cleaning device 1000, enabling the cleaning device 1000 to be switched from the second motion state or the first motion state to the third motion state, so that the cleaning device 1000 can be switched from the pose under the water surface 200 to the pose on the water surface 200.

In some embodiments, a portion of the buoyancy cavity (for example, a first portion 1101a of the buoyancy cavity) is provided at the front portion of the cleaning device body, and a portion of the buoyancy cavity (for example, a second portion 1101b of the buoyancy cavity) is provided at the rear portion of the cleaning device. The first injection opening is in fluid communication with the first portion of the buoyancy cavity, and the discharge opening is in fluid communication with the second portion of the buoyancy cavity. Alternatively, the entire buoyancy cavity is provided at the front portion or the rear portion of the first body. The first injection opening of the buoyancy cavity is closer to the front portion of the first body than the discharge opening, and the discharge opening is closer to the rear portion of the cleaning device.

In one embodiment, as shown in FIG. 5A5, one or more first liquid discharge openings 105 are provided at the bottom of the cleaning device 1000. The first liquid discharge opening 105 is in fluid communication with the discharge opening of the buoyancy cavity 1101, so that when the liquid in the buoyancy cavity is discharged from the buoyancy cavity through the discharge opening, the liquid is first discharged into the cleaning device 1000 and then discharged from the cleaning device 1000 through the first liquid discharge opening at the bottom of the cleaning device 1000. The first liquid discharge opening is further configured to allow liquid in the cleaning device 1000 to be quickly discharged when the cleaning device 1000 is lifted on the water surface or under the water surface or leaves the water. For example, as shown in FIG. 5A5, there are a plurality of first liquid discharge openings. The first liquid discharge openings are located at the rear portion of the cleaning device 1000 and behind the first water inlet 1031 for pool bottom cleaning. Alternatively, the first liquid discharge openings are located at the front portion of the cleaning device 1000 and in front of the first water inlet 1031.

When the cleaning device needs to be switched from the second motion state to the third motion state, as shown in FIG. 8A, the cleaning device 1000 climbs upward along a wall 320 of the pool (also referred to as a side wall of the pool) until the front portion of the cleaning device 1000 reaches the waterline 201, and the first injection opening 113 is at least partially exposed above the water surface. Then, under the action of the first adjustment member (for example, the motor of the pump rotates in a forward direction), external gas or gas outside the buoyancy cavity is input into the buoyancy cavity through the first injection opening 113, and liquid in the buoyancy cavity is discharged from the buoyancy cavity through the discharge opening, so that the volume of the gas in the buoyancy cavity 1101 is increased, and the volume of the liquid is reduced, enabling the gravity of the cleaning device 1000 to be reduced. In this way, the buoyancy force applied to the cleaning device 1000 is greater than the gravity of the cleaning device 1000. As shown in FIG. 8B, because the front portion of the cleaning device abuts against the side wall of the pool, the rear portion of the cleaning device 1000 floats up toward the water surface, and the cleaning device 1000 begins to be switched from the second motion state to the third motion state. As shown in FIG. 8C, the cleaning device 1000 is in the third motion state, indicating that switching of the cleaning device 1000 from the second motion state to the third motion state is completed.

On the contrary, if the cleaning device needs to be switched from the third motion state to the second motion state, under the action of the first adjustment member (for example, the motor of the pump rotates in a reverse direction), the gas in the buoyancy cavity is discharged from the buoyancy cavity through the first injection opening, and the liquid outside the buoyancy cavity is input into the buoyancy cavity through the discharge opening, so that the volume of the gas in the buoyancy cavity is reduced, and the volume of the liquid in the buoyancy cavity is increased, enabling the gravity of the cleaning device to be increased. In this way, the gravity of the cleaning device is greater than the buoyancy force applied to the cleaning device. Because the front portion of the cleaning device abuts against the side wall of the pool, the rear portion of the buoyancy cavity is filled with liquid before the front portion of the buoyancy cavity. Therefore, the rear portion of the cleaning device moves downward (that is, toward the water) before the front portion of the cleaning device, and the cleaning device begins to be switched from the third motion state to the second motion state until the cleaning device is in the second motion state. When the cleaning device is in the second motion state, it indicates that switching of the cleaning device from the third motion state to the second motion state is completed.

In one embodiment, if the cleaning device needs to be switched from the first motion state to the third motion state, the cleaning device may be first switched from the first motion state to the second motion state and then switched from the second motion state to the third motion state. This switching process is the same as a process of switching the cleaning device from the second motion state to the third motion state. Details are not described herein again. In other words, a process in which the cleaning device is switched from the first motion state to the third motion state needs to include a process in which the cleaning device is switched from the first motion state to the second motion state. On the contrary, if the cleaning device needs to be switched from the third motion state to the first motion state, the cleaning device may be first switched from the third motion state to the second motion state and then switched from the second motion state to the first motion state. In other words, a process in which the cleaning device is switched from the third motion state to the first motion state needs to include a process in which the cleaning device is switched from the third motion state to the second motion state.

Alternatively, the cleaning device is directly switched from the third motion state to the first motion state. Under the action of the first adjustment member, the gas in the buoyancy cavity is discharged through the first injection opening, and the liquid outside the buoyancy cavity enters the buoyancy cavity through the discharge opening. The rear portion of the buoyancy cavity is filled with liquid before the front portion of the buoyancy cavity. Therefore, the rear portion of the cleaning device moves downward before the front portion of the cleaning device, and the cleaning device sinks in a tilt state and is directly switched from the third motion state to the first motion state until the rear portion of the moving mechanism of the cleaning device abuts against the bottom of the pool. Then, the front portion of the cleaning device moves downward under the gravity of the cleaning device, so that the front portion of the moving mechanism of the cleaning device abuts against the bottom wall of the pool. In this way, switching of the cleaning device from the third motion state to the first motion state is completed. In other words, the cleaning device is directly switched from the third motion state to the first motion state without being switched from the third motion state to the second motion state.

In some embodiments, the buoyancy cavity 1101 may be provided at the front portion, the rear portion, or a middle portion of the cleaning device 1000. This is not limited herein. In a specific embodiment, as shown in FIG. 5A3, there are two buoyancy cavities symmetrically provided on two sides of the cleaning device that are arranged in the lateral direction. The lateral direction may also be referred to as a width direction of the cleaning device. One buoyancy cavity is used as an example for ease of description. As shown in FIG. 4C, a front portion of the buoyancy cavity (the first portion of the buoyancy cavity) is provided at the front portion of the cleaning device 1000, and a rear portion of the buoyancy cavity (the second portion of the buoyancy cavity) is provided at the rear portion of the cleaning device 1000. The buoyancy cavity is provided with the first injection opening 113 and the discharge opening 119. The first portion of the buoyancy cavity is in fluid communication with the second portion of the buoyancy cavity through a duct. The first injection opening is configured to allow gas to be input into the buoyancy cavity and allow gas in the buoyancy cavity to be discharged. The discharge opening 119 is configured to allow liquid in the buoyancy cavity to be discharged and allow liquid to be input into the buoyancy cavity, to change a volume of gas in the buoyancy cavity, thereby changing a magnitude relationship between the buoyancy force applied to the cleaning device 1000 and the gravity of the cleaning device 1000. In this way, the cleaning device 1000 can float up and submerge. When the pump rotates in the forward direction, the gas is input into the buoyancy cavity, and the liquid is discharged from the buoyancy cavity. When the pump rotates in the reverse direction, the gas is discharged from the buoyancy cavity, and the liquid is input into the buoyancy cavity. One of the forward direction and the reverse direction is a clockwise direction, and the other is a counterclockwise direction.

In another embodiment, the mode switching member 1100 includes a buoyancy cavity 1101, a first adjustment member, and at least one first injection opening 113. The buoyancy cavity 1101 is configured to accommodate gas. The buoyancy cavity 1101 is flexible. A volume of the buoyancy cavity 1101 varies with a volume of the gas. The first adjustment member is a pump (for example, a pneumatic pump, a hydraulic pump, or an electric pump). The pump can drive gas to be input into/discharged from the buoyancy cavity 1101, enabling the volume of the gas in the buoyancy cavity 1101 to be increased/reduced, so that the volume of the buoyancy cavity 1101 is increased/reduced. In this way, the volume of the gas in the buoyancy cavity 1101 is adjusted. If the cleaning device 1000 is in the second motion state, when the pump drives the gas to be input through the first injection opening 113, the volume of the gas in the buoyancy cavity 1101 in a deflated state is increased, and the volume of the buoyancy cavity 1101 is increased with the volume of the gas, enabling the buoyancy force applied to the buoyancy cavity to be increased, causing the buoyancy force applied to the cleaning device to be greater than the gravity of the cleaning device, so that the cleaning device 1000 can be switched from the second motion state to the third motion state. In this way, the cleaning device 1000 can be switched from the pose under the water surface 200 to the pose on the water surface 200. If the cleaning device 1000 is in the third motion state, when the pump drives the gas to be discharged through the first injection opening 113, the volume of the gas in the buoyancy cavity 1101 is reduced, and the volume of the buoyancy cavity 1101 is reduced with the volume of the gas, enabling the buoyancy force applied to the buoyancy cavity to be reduced, causing the buoyancy force applied to the cleaning device to be less than the gravity of the cleaning device, so that the cleaning device 1000 can be switched from the third motion state to the second motion state or directly switched from the third motion state to the first motion state. In other words, when the cleaning device is in the first motion state or the second motion state, the buoyancy cavity is in the deflated state, and when the cleaning device is in the third motion state, the buoyancy cavity is filled with gas, or the volume of the gas in the buoyancy cavity is increased, so that the buoyancy cavity is in an inflated state or an expanded state.

It should be noted that a gas source for the pump may be a gas tank provided on the cleaning device 1000 or external air. When the gas source for the pump is a gas tank, the gas may be input into the buoyancy cavity 1101 of the cleaning device 1000 through the first injection opening 113 on the water surface or under the water surface, so that the cleaning device 1000 can be directly switched from the first motion state to the third motion state without being switched from the first motion state to the second motion state or be switched from the first motion state to the second motion state and then from the second motion state to the third motion state. When the gas source for the pump is external air, the gas can be input into the buoyancy cavity 1101 through the first injection opening 113 only after the first injection opening 113 is exposed above the water surface. In addition, the buoyancy cavity 1101 whose volume varies with the volume of the gas is made of a flexible material. The flexible material may include, but is not limited to, polyvinyl alcohol resin, polyethylene glycol terephthalate, rubber, and the like.

In another embodiment, the mode switching member 1100 includes a second propeller 10722. The second propeller is configured to drive liquid to move in a second preset direction. When the liquid moves in the second preset direction, the liquid applies a second driving force to the cleaning device. A direction of the second driving force is opposite to the second preset direction. Under the second driving force, the cleaning device can be directly switched between the first motion state and the third motion state without being switched to the second motion state, so that the cleaning device can be quickly and conveniently switched between a position on the water surface and a position under the water surface.

Specifically, as shown in FIG. 3E, the second propeller 10722 includes a second propeller impeller 10722b, a second propeller motor 10722a, and two first propeller openings 10722c. One first propeller opening 10722c of the second propeller may be located at the top of the first body, and the other first propeller opening 10722c of the second propeller may be located at the bottom of the cleaning device. The second propeller impeller 10722b may be driven by the second propeller motor 10722a, so that liquid is sucked in through one of the two first propeller openings 10722c, and liquid is discharged through the other of the two first propeller openings 10722c. The discharged liquid applies the second driving force to the cleaning device. A rotation direction of the second propeller impeller 10722b (for example, a forward rotation or a reverse rotation of the motor) of the second propeller is adjusted to adjust the second preset direction to adjust the direction of the second driving force. In this way, the cleaning device is switched between the position on the water surface and the position under the water surface.

In another embodiment, the mode switching member 1100 includes the second propeller, the buoyancy cavity 1101, the first injection opening 113, and the first adjustment member. The cleaning device is mainly driven by the second propeller to be switched between the first motion state and the third motion state. When the cleaning device needs to remain in the third motion state, it mainly depends on an increase in the volume of the gas in the buoyancy cavity 1101, and the second propeller may be in the closed state.

Specifically, when the cleaning device needs to be switched from the first motion state to the third motion state, the second propeller is first turned on, and the second propeller motor 10722a rotates in the forward direction to generate the second driving force toward the water surface, so that the cleaning device can directly rise toward the water surface in the first motion state. When the first injection opening 113 is close to the water surface, under the action of the first adjustment member, external gas or gas in the gas tank of the cleaning device is input into the buoyancy cavity 1101 through the first injection opening 113 to increase the volume of the gas in the buoyancy cavity 1101, enabling the buoyancy force applied to the cleaning device to be greater than the gravity of the cleaning device, so that the cleaning device can remain in the third motion state, and then the second propeller can be turned off, or under the second driving force generated by the second propeller, the cleaning device is first switched from the first motion state to the third motion state, and then under the action of the first adjustment member, external gas or gas in the gas tank is input into the buoyancy cavity 1101 through the first injection opening 113, enabling the buoyancy force applied to the buoyancy cavity 1101 to be increased, so that the cleaning device can remain in the third motion state. On the contrary, when the cleaning device needs to be switched from the third motion state to the first motion state, the gas in the buoyancy cavity 1101 is discharged under the action of the first adjustment member, and the second propeller motor 10722a rotates in the reverse direction, so that the cleaning device can be directly switched from the third motion state to the first motion state under the second driving force. In this process, the second propeller motor 10722a rotates in the reverse direction while the gas is discharged from the buoyancy cavity 1101, or the gas is first discharged from the buoyancy cavity 1101, and then the second propeller motor 10722a is turned on and rotates in the reverse direction. Alternatively, the second propeller is not turned on, the gas is continuously discharged from the buoyancy cavity 1101, and the cleaning device sinks and is switched to the first motion state under the gravity of the cleaning device. In a process in which the cleaning device is switched from the first motion state to the third motion state, the cleaning device may remain in a horizontal posture or a tilt posture.

In one embodiment, as shown in FIG. 7, the cleaning device is provided with a water quality testing assembly 1160. A third cavity 10014d is provided at the rear portion of the cleaning device, and the water quality testing assembly 1160 is provided in the third cavity 10014d. For example, when the second water inlet 1032 is provided on the rear side wall of the rear portion of the cleaning device, the water quality testing assembly 1160 is provided below the second water inlet 1032 and behind the first accommodating cavity 10013. Alternatively, the second water inlet 1032 is not provided on the rear side wall of the cleaning device, and the water quality testing assembly may be provided at a position on the rear side wall of the cleaning device, where the position is close to the upper side wall. As shown in FIG. 5A2, a sixth cover plate 10016 is provided at the position, and the sixth cover plate 10016 is configured to prevent the water quality testing assembly 1160 from being exposed to the outside. At least one liquid inlet 10017 may be provided at a position on the first body corresponding to the water quality testing assembly, so that liquid in the pool can enter the water quality testing assembly 1160 and then be tested. Certainly, the water quality testing assembly 1160 may alternatively be provided at the front portion of the cleaning device. Optionally, the water quality testing assembly may be removed from the cleaning device in a pull-out manner. A pull-out direction may be a horizontal direction, and the water quality testing assembly is pulled out from a side wall of the cleaning device. The pull-out direction may alternatively be a vertical direction, and the water quality testing assembly is pulled out from the top surface or the bottom surface of the cleaning device. The pull-out direction may alternatively be a tilt direction, that is, the pull-out direction forms an included angle with both the horizontal direction and the vertical direction, and the water quality testing assembly may be pulled out obliquely from a surface of the cleaning device. A cavity configured to accommodate the water quality testing assembly may be pulled out or flipped over, and then the water quality testing assembly is removed from the cavity. Optionally, the water quality testing assembly may be mounted in an insertion manner and may be detached in a removing manner. An insertion direction and a removing direction may be a horizontal direction, a vertical direction, or a tilt direction.

Refer to FIG. 3B. FIG. 3B is a schematic cross-sectional diagram of a cleaning device according to an embodiment of the present disclosure. In some embodiments, the cleaning device 1000 further includes at least one first reagent spreading assembly 1150. Terms "medicament" and "reagent" are used interchangeably in this specification. The first reagent spreading assembly 1150 includes a first reagent storage assembly 1151. The first reagent spreading assembly 1150 further includes a first spreading drive assembly 1152. The first body is provided with a first reagent opening 11511. The first spreading drive assembly 1152 is provided in the first body 1001 and connected to the first reagent storage assembly 1151. The first spreading drive assembly 1152 is configured to drive and control a reagent in the first reagent storage assembly 1151 to flow out through the first reagent opening 11511. The first spreading drive assembly 1152 may control, based on a first operation parameter, the first reagent storage assembly 1151 to spread the reagent through the first reagent opening 11511. The first operation parameter may at least include a speed, for example, a flow rate, at which a to-be-spread reagent leaves the first reagent storage assembly 1151.

The first reagent storage assembly 1151 may be configured to store the to-be-spread reagent. The first reagent storage assembly 1151 may be provided in the first body 1001. The first reagent storage assembly 1151 may alternatively be detachably mounted to the first body 1001. The first reagent storage assembly 1151 is provided with the first reagent opening 11511. The to-be-spread reagent may be a reagent required to perform maintenance on liquid, such as algae removal, clarification, and disinfection.

In some embodiments, the first reagent spreading assembly 1150 further includes a reagent quantity detection assembly. The reagent quantity detection assembly is configured to detect an in-position state of the first reagent storage assembly 1151 and/or a quantity of to-be-spread reagents stored in the first reagent storage assembly 1151. The in-position state of the first reagent storage assembly 1151 indicates a state of whether the first reagent storage assembly 1151 is mounted to the cleaning device 1000. When the first reagent storage assembly 1151 is mounted to the cleaning device 1000, the first reagent storage assembly 1151 is in the in-position state. When the first reagent storage assembly 1151 is not mounted to the cleaning device 1000, the first reagent storage assembly 1151 is not in the in-position state.

Based on the above disposition, the cleaning device 1000 detects in time or in real time, by using the reagent quantity detection assembly, whether a storage quantity of to-be-spread reagents meets a spreading requirement, so that the user can replenish the to-be-spread reagent in time, and the cleaning device 1000 is used conveniently.

In some embodiments, the first reagent storage assembly 1151 may include a plurality of separated storage spaces configured to store different types of reagents. The plurality of storage spaces are all in fluid communication with the first spreading drive assembly 1152, or the first spreading drive assembly 1152 includes a drive unit in fluid communication with each storage space and configured to drive a reagent stored in each storage space. There may also be one or more first reagent openings 11511 provided at different positions on the first body 1001. For example, the first reagent opening may be provided close to an inlet or an outlet of the main water pump 1061, so that the reagent discharged through the first reagent opening 11511 can be dispersed and evenly spread in the pool.

In some embodiments, in the forward direction of the cleaning device, the first reagent spreading assembly 1150 is provided at the rear portion of the cleaning device and is located behind the first accommodating cavity 10013 or the first filtering box 1051. For example, the first reagent spreading assembly 1150 is provided in the second sub-cavity 10014b of the cleaning device and is at least partially provided above the electronic control box 6000. The electronic control box 6000 and a flow guiding cover 1015 are provided in the second accommodating cavity 10014, and an inner cavity of the flow guiding cover 1015 serves as the first sub-cavity 10014a.

For example, as shown in FIG. 3A, a reagent cavity 1016 is provided at the rear portion of the cleaning device. The first reagent storage assembly 1151 is provided in the reagent cavity 1016. The first spreading drive assembly 1152 drives the reagent in the first reagent storage assembly 1151 to be transmitted to the first sub-cavity 10014a through the first reagent opening 11511. Under the action of the suction assembly 1060, the reagent is discharged with liquid in the first sub-cavity 10014a through the first water outlet 1041 and then spread to the liquid in the pool. Because the cleaning device moves in the pool, the first reagent spreading assembly 1150 can spread the reagent to liquid at different positions in the pool, so that the reagent can be spread more evenly, and the liquid in the pool can be processed uniformly.

Specifically, in one embodiment, as shown in FIG. 3C and FIG. 3D, at least one first reagent outlet 1153 is provided in the first sub-cavity 10014a, and the first spreading drive assembly 1152 includes a first pump body, a first duct, and a second duct. An inlet of the first pump body is connected to the first reagent opening 11511 through the first duct. An outlet of the first pump body is connected to the first reagent outlet 1153 through the second duct. The first pump body drives the reagent in the first reagent storage assembly 1151 to enter the first sub-cavity 10014a through the first duct, the first pump body, the second duct, and the first reagent outlet 1153, and then the main water pump drives the reagent to be spread in the pool through the liquid outlet portion 1040. In one embodiment, the first pump body is provided in the second sub-cavity 10014b but located outside the electronic control box 6000. Because the second sub-cavity 10014b outside the electronic control box 6000 is in communication with the liquid in the pool, if the first pump body is provided in the second sub-cavity 10014b but located outside the electronic control box 6000, the first pump body needs to be waterproofed to prevent liquid from entering the first pump body, so that operation of a motor of the first pump body is not affected. In another embodiment, the first pump body, the first duct, and the second duct are all provided in the electronic control box 6000, and a part of the first reagent opening 1151 may extend into the electronic control box 6000 and be connected to the first duct, so that the entire first spreading drive assembly 1152 is located in a sealed cavity of the electronic control box 6000 to prevent the first pump body from being in contact with external liquid. In addition, the first duct and the second duct are both located in the electronic control box 6000, and the flow guiding cover 1015 is provided at the top of the electronic control box 6000, so that the second duct is conveniently connected to the first reagent outlet 1153.

In addition, as shown in FIG. 3A, the first reagent spreading assembly 1150 is located behind the flow guiding cover 1015 and is provided at the top of the electronic control box 6000. There are two buoyancy cavities 1101 of the floating-submerging mechanism 1100. The two buoyancy cavities 1101 are symmetrically provided on the left side and the right side of the cleaning device body. At least a portion of the buoyancy cavity 1101 (for example, a second portion 1101b of the buoyancy cavity) is provided at the rear portion of the cleaning device. Second portions 1101b of the two buoyancy cavities 1101 surround a periphery of the flow guiding cover 1015 and are located in front of the reagent cavity 1016, leading to compact structural arrangement of the rear portion of the cleaning device. The second water inlet 1032 is provided at the front portion of the cleaning device. The first reagent spreading assembly 1150 is provided at the rear portion of the cleaning device. The first accommodating cavity 10013 is closer to the second water inlet 1032 than the flow guiding cover 1015, the electronic control box 6000, and the reagent cavity 1016. The first water outlet 1041 is provided at the rear portion of the cleaning device. A main motor of the main water pump of the suction assembly 1060 is provided in the electronic control box 6000. A main impeller of the main water pump is provided in the flow guiding cover 1015. An output shaft of the main motor extends through the top of the electronic control box 6000 into the flow guiding cover 1015 and then is connected to the main impeller, leading to more compact structural arrangement of the cleaning device.

In some embodiments, the pool has diverse region topographies, at least including a wall topography of the pool. The wall topography may include a shape of a boundary of a target side wall, and the boundary of the target side wall may be in a shape of a straight line, an arc, a right angle, an acute angle, or an obtuse angle. A joint between the target side wall and an adjacent target side wall is in a shape of a right angle, a curved angle, or the like. During operation of the swimming pool robot 1000, a detection assembly 1120 may detect, in real time, a topography of a pool wall facing the detection assembly 1120. A control system is electrically connected to at least one detection assembly 1120 to adjust an operation posture of the swimming pool robot 1000 based on information of the detection assemblies 1120.

In some embodiments, the detection assembly 1120 at least includes a first detection sub-member 1121 and a second detection sub-member 1122. The detection assembly 1120 may also be referred to as the identification assembly 1120. The first detection sub-member 1121 may also be referred to as the first identification sub-member 1121. The second detection sub-member 1122 may also be referred to as the second identification sub-member 1122. The first detection sub-member 1121 is different from and close to the second detection sub-member 1122. The first detection sub-member 1121 and the second detection sub-member 1122 may be arranged left and right, arranged vertically, or arranged on one side surface in a staggered manner. The first detection sub-member 1121 and the second detection sub-member 1122 are provided to expand a detection range, so that a special region topography is more easily detected.

The first detection sub-member 1121 may be an infrared sensor, and the second detection sub-member 1122 may be an ultrasonic sensor. The ultrasonic sensor has a large detection range and can detect an obstacle far away from the swimming pool robot 1000. The infrared sensor has a small detection range and can only detect an obstacle close to the swimming pool robot 1000. In actual use, the ultrasonic sensor is used as a primary detection component, and the infrared sensor is used as an auxiliary detection component. However, when the swimming pool robot 1000 is close to the obstacle, and the obstacle is in a special shape, a detection effect of the infrared sensor is better than that of the ultrasonic sensor. Certainly, the first detection sub-member 1121 and the second detection sub-member 1122 may alternatively be both ultrasonic sensors or infrared sensors.

In some embodiments, the detection assembly 1120 further includes a vision identification assembly 1123 which is also referred to as a vision detection assembly 1123. The vision detection assembly 1123 is configured to capture an image of the pool, and a control assembly 1154 processes the captured image to control an action or a behavior of the swimming pool robot 1000. For example, the vision detection assembly 1123 is configured to photograph an environment of the pool and detect an image feature, so that functions such as localization, target detection, map construction, obstacle avoidance, and the like are implemented based on the image feature.

In some embodiments, the vision detection assembly 1123 includes a camera unit 11231. In some embodiments, the vision detection assembly 1123 includes a camera unit 11231 and a light-supplementing member 11232. The camera unit 11231 is configured to capture an image of the pool. The light-supplementing member 11232 is configured to adjust brightness of a photographed region of the camera unit 11231. For example, light emitted by the light-supplementing member 11232 can be directly irradiated to the photographed region, and brightness of the light emitted by the light-supplementing member 11232 is adjusted to adjust the brightness of the region. When there are a plurality of camera units 11231, different camera units 11231 may share a light-supplementing member 11232, or different camera units 11231 may correspond to different light-supplementing members 11232.

In some embodiments, a single light-supplementing member 11232 is provided adjacent to the camera unit 11231, or a plurality of light-supplementing members 11232 are provided around the camera unit 11231.

In some embodiments, the single light-supplementing member 11232 or the plurality of light-supplementing members 11232 are provided separately from the camera unit 11231 and may be mounted at different positions on the swimming pool robot 1000 based on an actual requirement, provided that the brightness of the photographed region of the camera unit 11231 can be adjusted by using the light emitted by the light-supplementing member.

In some embodiments, the vision detection assembly 1123 further includes a light-shielding member 11233. The light-shielding member 11233 is provided at a periphery of the camera unit 11231 or an edge of a side of the camera unit 11231, where the side of the camera unit 11231 is close to the light-supplementing member 11232. The light-shielding member 11233 is provided, so that the following case can be avoided: The light directly radiates from the light-supplementing member 11232 to the camera unit 11231, leading to damage to a photosensitive element of the camera unit 11231. In addition, a possibility that the light directly radiates from the light-supplementing member 11232 to the camera unit 11231, leading to overexposure of an image captured by the camera unit 11231 can be reduced. This improves a service life and imaging quality of the camera unit 11231.

In some embodiments, the camera unit 11231 is provided with a waterproof component. For example, a hydrophobic layer may be provided on a surface of a lens of the camera unit 11231, to prevent water drop condensation and a residue of a water flow trace from affecting a photographing effect, so that the vision detection assembly 1123 can obtain clearer and more accurate image information. In addition, damage to the camera unit 11231 and performance degradation due to water erosion are avoided. This extends the service life of the camera unit 11231.

In some embodiments, as shown in FIG. 5A5, the detection assembly 1120 further includes at least one topography detection assembly 1124. The at least one topography detection assembly 1124 is provided on a front side of the swimming pool robot 1000 and close to the bottom of the swimming pool robot and/or provided on a front side of the bottom of the swimming pool robot, and close to the moving mechanism of the swimming pool robot 1000. The topography detection assembly 1124 is configured to detect a topography of the to-be-cleaned surface under the swimming pool robot 1000 to adjust the operation posture of the swimming pool robot 1000.

In some embodiments, the swimming pool robot further includes a first electronic control box 6000. The first electronic control box 6000 includes a sealed cavity. The first electronic control box is at least partially provided in the second sub-cavity. The main motor of the main water pump 1061 is provided in the sealed cavity. An output shaft of the main motor extends into the first sub-cavity and is connected to the main impeller 10612. The electronic control box is configured to accommodate an electronic element of the cleaning device, for example, the battery pack, the drive motor configured to drive the moving mechanism to move, the first adjustment member of the floating-submerging mechanism, and the control unit, so that the electronic element is isolated from the outside.

In some embodiments, as shown in FIG. 3C and FIG. 3D, FIG. 4F and FIG. 4G, or FIG. 5A6, to form the first sub-cavity, the cleaning device further includes a flow guiding cover 1015. The flow guiding cover includes the first sub-cavity 10014a. One end of the flow guiding cover 1015 is provided on a side wall of the first accommodating cavity and covers or surrounds the second liquid discharge opening 10013a, so that the second liquid discharge opening 10013a is in fluid communication with the first sub-cavity 10014a. The other end of the flow guiding cover 1015 is connected to the first water outlet. In the height direction of the cleaning device, at least a portion of the flow guiding cover is located at the top of the electronic control box 6000. A part, in the second accommodating cavity, other than the flow guiding cover serves as the second sub-cavity 10014b. As shown in FIG. 3B, the first electronic control box 6000 is provided in the second sub-cavity. The main motor 10611 of the main water pump is provided in the electronic control box. An output shaft of the main motor extends out of the electronic control box and extends into the flow guiding cover and is connected to the main impeller 10612.

As shown in FIG. 3C or FIG. 4F, when there is one suction assembly, there is one flow guiding cover 1015. As shown in FIG. 5A6, when there are a plurality of suction assemblies, there are a plurality of flow guiding covers. For example, when there are three suction assemblies, there are three flow guiding covers.

As shown in FIG. 1, FIG. 4H, and FIG. 7 or FIG. 5A4 and FIG. 5A5, a third liquid discharge opening 10013b is further provided on a side wall of the first accommodating cavity. The third liquid discharge opening 10013b is in fluid communication with the second sub-cavity 10014b. The first liquid discharge opening 105 is provided at the bottom of the first body. The third liquid discharge opening 10013b, the second sub-cavity, and the first liquid discharge opening are sequentially in fluid communication to form a third water flow path for quick water discharge. When the cleaning device is lifted out of the water surface, the third baffle plate 10013c at the third liquid discharge opening is opened, and liquid in the first filtering box and liquid in the first accommodating cavity are quickly discharged from the cleaning device through the third liquid discharge opening, the second sub-cavity, and the first liquid discharge opening. The third baffle plate at the third liquid discharge opening is in an open state only when the cleaning device leaves the water surface. Otherwise, the third baffle plate is always in a closed state.

In some embodiments, as shown in FIG. 3A to FIG. 3D or FIG. 5A1 to FIG. 5A6, the first water inlet is provided at the bottom of the first body, and the second water inlet is provided on the front side wall of the first body. The swimming pool robot moves forward to perform underwater cleaning and water surface cleaning. The first electronic control box is provided in the second sub-cavity, and the first accommodating cavity is closer to the front side wall of the first body than the second accommodating cavity. The first electronic control box is provided in the second sub-cavity, the first filtering box is provided in the first accommodating cavity, and the first filtering box is closer to the front side wall of the first body than the first electronic control box, or the first electronic control box is located behind the first filtering box. There are two buoyancy cavities of the floating-submerging mechanism, and the two buoyancy cavities are symmetrically provided on two opposite sides of the first body. As shown in FIG. 5A3, each buoyancy cavity 1101 includes a first portion 1101a and a second portion 1101b. The first portion 1101a of the buoyancy cavity is provided at the front portion of the first body, and the second portion 1101b of the buoyancy cavity is provided in the second sub-cavity and located at the top of the first electronic control box. For example, the first portion of the buoyancy cavity is provided in space between the front side wall of the first body and the first accommodating cavity. For example, in some embodiments, the first body further includes a first filtering box cavity. An inner cavity of the first filtering box cavity serves as the first accommodating cavity. In this case, the first portion of the buoyancy cavity is provided between the first filtering box cavity and the front side wall. The second liquid discharge opening and the third liquid discharge opening are both provided on a side wall of the first filtering box cavity, and the first water inlet 1031 and the second water inlet 1032 may be provided on the first filtering box cavity and in fluid communication with the outside, or the first water inlet 1031 and the second water inlet 1032 may be provided on a housing of the first body, and the first filtering box cavity is provided with communicating openings, so that the first water inlet 1031 is in fluid communication with the first inlet through one communicating opening, and the second water inlet is in fluid communication with the second inlet through another communicating opening. The first filtering box cavity may be mounted to the housing of the first body or molded to the housing of the first body as a part of the housing of the first body.

In some embodiments, because the battery pack 1400, the control unit, the drive motor, and the like are provided in the first electronic control box, the first electronic control box is heavy. In other words, most of a weight of the swimming pool robot comes from the first electronic control box. In the swimming pool robot shown in FIG. 3A to FIG. 3D or FIG. 5A1 to FIG. 5A6, the first electronic control box is closer to the rear side wall of the first body than the first accommodating cavity. Therefore, the rear portion of the swimming pool robot is heavier than the front portion of the swimming pool robot. To enable the swimming pool robot to float on the water surface or be switched from a position under the water surface to a position on the water surface, the buoyancy cavity applies a larger buoyancy force to the rear portion of the swimming pool robot at which the first electronic control box is located. Therefore, a volume of the second portion of the buoyancy cavity is greater than a volume of the first portion of the buoyancy cavity to increase the buoyancy force generated by the buoyancy cavity in which the first electronic control box is located, to ensure that the swimming pool robot can be switched from the position under the water surface to the position on the water surface and float on the water surface. For example, the volume of the second portion of the buoyancy cavity is 1.5 times, 2 times, 3 times, or 4 times the volume of the first portion of the buoyancy cavity.

As shown in FIG. 5A6, the swimming pool robot is provided with the water quality testing assembly. In one embodiment, the water quality testing assembly is provided on the second sub-cavity, and an opening is provided on the rear side wall of the first body. A sixth cover plate is provided over the opening. The sixth cover plate is opened to replace the testing box 11601 of the water quality testing assembly from the rear side wall of the first body. Alternatively, an opening is provided on a top wall of the first body, and the sixth cover plate is provided over the opening. The sixth cover plate is opened to replace the testing box of the water quality testing assembly from the top wall of the first body. In one embodiment, the water quality testing assembly is provided above the first electronic control box 6000 and located behind the second portion of the buoyancy cavity. The second portions of the two buoyancy cavities are provided at the top of the first electronic control box and around a periphery of the flow guiding cover corresponding to the first suction assembly. The main motor of the first suction assembly is provided in the first electronic control box. The main impeller is provided in the flow guiding cover. In this way, the second portions of the buoyancy cavities, the first electronic control box, the water quality testing assembly, the suction assembly, and the flow guiding cover are arranged compactly in the second accommodating cavity and occupy small space.

In some embodiments, as shown in FIG. 5A3, there are two first propellers. The two first propellers are symmetrically provided on the third side wall and the fourth side wall of the first body, and the two first propellers are provided at the rear portion of the first body. As shown in FIG. 5A5, there are two moving mechanisms. The two moving mechanisms are symmetrically provided on the third side wall and the fourth side wall of the first body. There are two first cleaning members. One first cleaning member 1201 is provided between front portions of the two moving mechanisms, and the other first cleaning member 1201 is provided between rear portions of the two moving mechanisms.

As shown in FIG. 5A4 and FIG. 5A6, the cleaning device includes one first suction assembly and two second suction assemblies. The two second suction assemblies are closer to the front side wall of the first body than the first suction assembly.

For example, the two second suction assemblies are provided on two sides of the first accommodating cavity. For example, one second suction assembly is provided in a region between the first accommodating cavity and the third side wall of the first body, and the other second suction assembly is provided in a region between the first accommodating cavity box and the fourth side wall. In other words, in the lateral direction of the swimming pool robot, two side walls of the first filtering box 1051 are respectively provided with a first avoidance region 10541 and a second avoidance region 10542. One second suction assembly is provided in the first avoidance region 10541, and the other second suction assembly is provided in the second avoidance region 10542.

As shown in FIG. 5A3, the first vision detection sub-assembly 1123a, the second vision detection sub-assembly 1123b, the first detection sub-member 1121, the second detection sub-member 1122, and the distance measurement sensor are provided on the front side wall of the first body. The first vision detection sub-assembly 1123a is located higher than the second vision detection sub-assembly 1123b and avoids the second water inlet. The second water inlet is located above the second vision detection sub-assembly 1123b. The first detection sub-member 1121 and the second detection sub-member 1122 are provided side by side and located lower than the second vision detection sub-assembly 1123b.

In some embodiments, at least a portion of the first vision detection sub-assembly 1123a is located higher than the second water inlet 1032. When the swimming pool robot operates on the water surface, at least a portion of the first vision detection sub-assembly 1123a is located above the water surface, to ensure that the first vision detection sub-assembly 1123a detects debris on the water surface. When it is detected that there is debris on the water surface, the swimming pool robot moves toward the debris and then moves to the debris to perform spot cleaning on the debris. When the swimming pool robot performs underwater cleaning, the first vision detection sub-assembly 1123a can also detect debris on the bottom of the pool. When it is detected that there is debris on the bottom of the pool, the cleaning device moves toward the debris and then moves to the debris to perform spot cleaning on the debris.

Further, most of the first vision detection sub-assembly 1123a is located higher than the second water inlet. When the swimming pool robot operates on the water surface, the first vision detection sub-assembly 1123a is located above the water surface, and a larger height difference between the first vision detection sub-assembly and the water surface indicates a larger detection range of the first vision detection sub-assembly 1123a. In this way, the first vision detection sub-assembly can detect debris within a larger region range. For example, as shown in FIG. 5A3, there are two first vision detection sub-assemblies 1123a. The two first vision detection sub-assemblies 1123a are arranged beyond two sides of the second water inlet, and the first vision detection sub-assemblies 1123a are closer to the top of the first body than the second water inlet in the height direction of the swimming pool robot.

In some embodiments, as shown in FIG. 5A3, the distance measurement sensor 1125 is provided on the front side wall of the first body. The distance measurement sensor 1125 is mainly configured to find the base station. Because the base station is provided on a poolside, when the swimming pool robot is located in the pool, the base station is located higher than the swimming pool robot. To detect the base station by the distance measurement sensor, the distance measurement sensor is provided on the front side wall of the first body and tilts upward, so that a probe of the distance measurement sensor for transmitting a signal and/or receiving a signal tilts upward.

For example, as shown in FIG. 5A1, the front side wall of the first body includes a first wall 10011a and a second wall 10011b, and the first wall is located higher than the second wall. The first wall extends substantially in the height direction of the swimming pool robot. The second wall tilts relative to the first wall. The second wall protrudes forward from the first wall. The distance measurement sensor is provided on the second wall, so that a detection range of the distance measurement sensor is not blocked by other components of the swimming pool robot, and the distance measurement sensor can exchange a signal with the base station to find the base station.

In this embodiment, the second water inlet is provided on the front side wall of the first body, and the swimming pool robot automatically returns from the water to the base station body on the poolside. If the first filtering box is cleaned with liquid sprayed out through the first nozzle that extends into the first filtering box through the second water inlet, the swimming pool robot moves forward on the water surface to return to the base station body, so that the swimming pool robot can return to the stop position on the base station body, and the first nozzle extends into the first filtering box through the second water inlet. Correspondingly, when the swimming pool robot enters the water from the base station body through the carrying member, the swimming pool robot moves backward on the carrying surface to enter the water. For example, in a process in which the swimming pool robot returns from the water surface to the carrying surface, the front portion of the moving mechanism abuts against the carrying surface, so that the swimming pool robot can return to the carrying surface.

In some embodiments, as shown in FIG. 5A5, in a direction from the second end portion to the first end portion of the cleaning device, the first water inlet is located in front of a self-cleaning debris discharge opening, a charging receiving member is located behind the self-cleaning debris discharge opening, a fourth groove is located behind the charging receiving member, and the first liquid discharge opening 105 is located behind the fourth groove.

In another embodiment, the swimming pool robot shown in FIG. 4A to FIG. 4H differs from the swimming pool robot shown in FIG. 5A1 to FIG. 5A6 in that the second water inlet is provided on the rear side wall of the first body, and the swimming pool robot moves forward to perform underwater cleaning and moves backward to perform water surface cleaning. Correspondingly, the first accommodating cavity is closer to the rear side wall of the first body than the second accommodating cavity, enabling the second water inlet to be in fluid communication with the first filtering box. The second accommodating cavity is closer to the front side wall of the first body than the first accommodating cavity. Disposition of the first electronic control box, the suction assembly, the water quality testing assembly, the second portion of the buoyancy cavity, and the flow guiding cover in the second accommodating cavity is the same as that of the swimming pool robot shown in FIG. 5A1 to FIG. 5A6, and a difference lies in that the first electronic control box, the suction assembly, the water quality testing assembly, the second portion of the buoyancy cavity, and the flow guiding cover in the second accommodating cavity are all close to the front portion of the first body. Because the first electronic control box is closer to the front side wall of the first body than the first accommodating cavity, the front portion of the swimming pool robot is heavier than the rear portion of the swimming pool robot. Therefore, when the swimming pool robot moves forward from a first horizontal surface to a first slope surface or from a first slope surface to a first horizontal surface, the front portion of the swimming pool robot is not lifted. Correspondingly, as shown in FIG. 5A6, two first propellers are symmetrically provided on the third side wall and the fourth side wall of the first body, and the first propellers are provided at the front portion of the first body.

In this embodiment, the second water inlet is provided on the rear side wall of the first body, and the swimming pool robot automatically returns from the water to the base station body on the poolside. If the first filtering box is cleaned with liquid sprayed out through the first nozzle that extends into the first filtering box through the second water inlet, the swimming pool robot moves backward on the water surface to return to the base station body, so that the swimming pool robot can return to the stop position on the base station body, and the first nozzle extends into the first filtering box through the second water inlet. Correspondingly, when the swimming pool robot enters the water from the base station body through the carrying member, the swimming pool robot moves forward on the carrying surface to enter the water. For example, in a process in which the swimming pool robot returns from the water surface to the carrying surface, the rear portion of the moving mechanism abuts against the carrying surface, so that the swimming pool robot can return to the carrying surface.

In addition, the first portion of the buoyancy cavity may be provided at the rear portion of the first body, for example, provided in space between the first accommodating cavity and the rear side wall of the first body. Alternatively, as shown in FIG. 4G, in the lateral direction of the swimming pool robot, a first portion of one buoyancy cavity is provided in space between the first accommodating cavity and the third side wall of the first body, and a first portion of the other buoyancy cavity is provided in space between the first accommodating cavity and the fourth side wall of the first body. The first portion of the buoyancy cavity is closer to the rear side wall of the first body than the second portion of the buoyancy cavity.

As shown in FIG. 7, the cleaning device is provided with a handle 1500, and the first filtering box cavity is provided with a plurality of third liquid discharge openings 10013b. For example, when the handle 1500 is provided at the front portion of the cleaning device, the first filtering box cavity is provided at the rear portion of the cleaning device. As shown in FIG. 1, the third liquid discharge opening 10013b is provided on a rear side wall, a left side wall, or a right side wall of the first filtering box cavity 1052. When the cleaning device is lifted by using the handle 1500, the cleaning device tilts, so that the third liquid discharge opening 10013b is located lower than the handle. In this way, liquid in the first filtering box cavity can be quickly discharged. For example, as shown in FIG. 5A4, the third liquid discharge opening 10013b is provided on each of the left side wall and the right side wall of the first filtering box cavity. When the cleaning device is lifted by using the handle 1500, the handle 1500 is located higher than the third liquid discharge opening 10031b. Correspondingly, the first liquid discharge opening 105 is provided on a rear side of the bottom of the cleaning device. For example, as shown in FIG. 4H, the first liquid discharge opening 105 is provided at a joint between the bottom of the cleaning device and the rear side wall of the cleaning device, or as shown in FIG. 5A5, the first liquid discharge opening 105 is provided at a rear portion of the bottom of the cleaning device. Alternatively, when the handle 1500 is provided at the rear portion of the cleaning device, the third liquid discharge opening 10013b is provided on a front side wall or a front portion of the first filtering box cavity, and the first liquid discharge opening 105 is provided at a front portion of the bottom of the cleaning device, so that when the cleaning device is lifted by using the handle 1500, liquid in the first accommodating cavity can be discharged under cooperation of the third liquid discharge opening and the first liquid discharge opening.

In some embodiments, the cleaning device can further perform spot cleaning when cleaning the pool. The cleaning device is provided with a detection assembly 1120 and a control system. The detection assembly can detect an attribute feature and a position of specific debris. The control system controls, based on a detection result of the detection assembly and position information of the specific debris, the cleaning device to move to the specific debris to clean the specific debris. In some embodiments, for example, when the cleaning device cleans the bottom of the pool, the detection assembly of the cleaning device performs feature detection in a region within a specific range, for example, in front of and/or on a side of the cleaning device. When it is detected that there is specific debris in the region within the specific range, for example, in front of or on a side of the cleaning device, a position of the specific debris is determined, and the control system controls the cleaning device to temporarily stop moving along a current cleaning path and then re-plan a new path at a position between a stop position point and the position of the specific debris to move to the specific debris, or the control system controls the cleaning device to temporarily stop moving along a current cleaning path, directly turn to the specific debris, and then move to the specific debris, when the cleaning device moves to the specific debris, the cleaning device repeatedly moves at the position of the specific debris and cleans the specific debris until the specific debris has been cleaned, and when the specific debris has been cleaned, the control system controls the cleaning device to move to the original stop position point (in this process, the cleaning device may move backward to the stop position point or turn around and then move forward to the stop position point, which is not limited in this embodiment) and then continue to perform cleaning along the original cleaning path.

In some embodiments, the main water pump 1061 remains in operation when the cleaning device moves toward the specific debris, that is, the cleaning device remains in a state of cleaning the bottom of the pool. In some embodiments, when the cleaning device moves toward the specific debris, the main water pump is turned off until the cleaning device reaches the specific debris, and when the cleaning device reaches the specific debris, the main water pump is turned on, and the cleaning device cleans the specific debris, thereby reducing power consumption. In some embodiments, when the cleaning device cleans the bottom of the pool along a bow-shaped path (the bow-shaped path means that two adjacent paths are parallel to each other, and the swimming pool robot moves along the two adjacent paths in two opposite forward directions), the detection assembly detects that there is specific debris in a specific region in front of or on a side of the cleaning device and detects a position of the specific debris, and the control system controls the cleaning device to temporarily stop performing cleaning along the bow-shaped path, turn around from a stop position point to the specific debris, and then move to the specific debris, when the cleaning device moves to the specific debris, the cleaning device repeatedly moves at the position of the specific debris and cleans the specific debris, and when the specific debris has been cleaned, the control system controls the cleaning device to move to the original stop position point (in this process, the cleaning device may move backward to the stop position point or turn around and then move forward to the pause position point, which is not limited in this embodiment) and then continue to perform cleaning along the original cleaning path (the bow-shaped path). In some embodiments, the specific debris includes, but is not limited to, leaves, carcasses, household waste, food residues, stones, sand, and the like. The detection assembly detects attribute features of the specific debris from different directions to determine a type of the specific debris and calculates a position of the specific debris based on a detected related parameter.

In some embodiments, the cleaning device can control a cleaning mode based on different degrees of dirtiness of different regions of the pool when cleaning the pool. In some embodiments, before the cleaning device moves and performs cleaning, the detection assembly detects different degrees of dirtiness of to-be-cleaned regions, the to-be-cleaned regions are classified based on the different degrees of dirtiness, and the control system performs different cleaning strategies in different regions based on the different degrees of dirtiness. The different cleaning strategies include different cleaning durations. For example, if it is detected that a degree of dirtiness of a region is high, a duration for which the control system controls the cleaning device to clean the region is greater than a duration for cleaning a region of a low degree of dirtiness. The different cleaning strategies further include controlling operation power of the main water pump. For example, if it is detected that a degree of dirtiness of a region is high, operation power of the main water pump of the cleaning device controlled by the control system in the region is greater than operation power of the main water pump in a region of a low degree of dirtiness. The different cleaning strategies further include, but are not limited to, different cleaning paths, different cleaning modes, and the like. The above cleaning strategies may be cross-used for a plurality of times, which are not listed herein one by one.

In some embodiments, the cleaning device further has a supplemental cleaning function. The supplemental cleaning function means that after cleaning a region, the cleaning device detects cleanliness of the cleaned region and re-cleans, based on a detection result, a region whose detection result does not meet an expected detection result or a missed region, or the cleaning device performs spot and supplemental cleaning on missed specific debris. In some embodiments, after the cleaning device cleans a region, the detection assembly detects the cleaned region, and when the detection assembly detects a region whose cleaning effect does not meet expectation, detects a missed region, or detects that there is still specific debris in the cleaned region, and detects a specific position of the specific region and/or the specific debris, the control system controls the cleaning device to move to the specific region and/or the specific debris to perform supplemental cleaning. In a moving process, the main water pump of the cleaning device may or may not be turned on. This is not limited herein. According to the above disposition, an overall cleaning effect of the cleaning device can be improved, and full-coverage cleaning can be implemented.

In some embodiments, the detection assembly includes, but is not limited to, a video camera, a camera, a three-dimensional imaging device, and the like, and the detection assembly can be trained and optimized for a feature, a type, and the like of specific debris through machine learning. The control system includes a storage unit, a data processing unit, a communication unit, and the like. Information detected by the detection assembly is processed by the processing unit of the control system. Related learning information is stored in the storage unit. The control system is in fluid communication with other components through the communication unit.

Although some of the above embodiments are described by using an example in which the cleaning device cleans the bottom of the pool, the above embodiments are also completely applicable to a process in which the cleaning device cleans the water surface or a wall of the pool. Details are not described herein again. According to the above disposition, a water surface cleaning effect and a pool wall cleaning effect can be improved, and full-coverage cleaning can be implemented.

The base station includes a base station body and a carrying member. The carrying member includes a first end and a second end opposite to each other. An upper surface of the carrying member between the first end and the second end serves as the carrying surface. The swimming pool robot can automatically return to the base station body on the poolside with the help of the carrying member or automatically enter the pool from the base station body with the help of the carrying member. The base station body is connected to the carrying member and supports the carrying member.

In some embodiments, the cleaning device automatically leaves the water or enters the water with the help of the carrying member. The carrying member may carry the cleaning device 1000 to move, the cleaning device 1000 may actively move on the carrying surface, or the cleaning device 1000 may be driven by the carrying surface to passively move.

In some embodiments, as shown in FIG. 4G and FIG. 5C, the cleaning device further includes a guiding mechanism 1042 provided close to the second water inlet, and the guiding mechanism may also be referred to as a first guiding mechanism. The first guiding mechanism has an operation state and a non-operation state. When the cleaning device needs to perform water surface cleaning, the first guiding mechanism is in the operation state, and as shown in FIG. 5C, in the lateral direction of the cleaning device, the first guiding mechanism extends beyond the first body and is configured to guide liquid outside the first body to flow into the first filtering box through the second water inlet. This improves directional fluidity of water toward the second water inlet and debris capture efficiency. When the cleaning device finishes water surface cleaning, the first guiding mechanism is in the non-operation state, and in the lateral direction of the cleaning device, the first guiding mechanism does not extend beyond the cleaning device body without occupying space outside the first body.

In one embodiment, as shown in FIG. 4G and FIG. 5C, the first guiding mechanism 1042 includes a first guiding plate 10421 and a second guiding plate 10422. A first end 10421a of the first guiding plate 10421 is rotatably provided on the first body, and a third end 10422a of the second guiding plate 10422 is rotatably provided on the first body. When the first guiding mechanism is in the non-operation state, in a first water flow direction in which the liquid in the pool flows toward the second water inlet, the first guiding plate 10421 and the second guiding plate 10422 are located upstream relative to the second water inlet 1032. A second end 10421b of the first guiding plate 10421 and a fourth end 10422b of the second guiding plate 10422 are close to each other, and the first end 10421a and the third end 10422a are away from each other. For example, first space is formed between the first end 10421a and the third end 10422a, and the second end 10421b and the fourth end 10422b are located within the first space. When the cleaning device needs to perform water surface cleaning, the second end 10421b of the first guiding plate 10421 and the fourth end 10422b of the second guiding plate 10422 rotate toward the exterior of the first body, and the second end 10421b and the fourth end 10422b are away from each other. For example, the second end 10421b and the fourth end 10422b are located outside the first space, so that the first guiding plate 10421 and the second guiding plate 10422 separately extend beyond two ends of the cleaning device, and a "flared" guiding region is formed between the first guiding plate 10421 and the second guiding plate 10422. In other words, a distance between the first end 10421a and the third end 10422a is less than a distance between the second end 10421b and the fourth end 10422b, so that liquid outside the cleaning device enters the second water inlet 1032 in the first water flow direction.

For example, the second water inlet 1032 is provided on the front side wall of the cleaning device, and the cleaning device moves forward to clean the water surface. In this case, the first guiding mechanism 1042 is in the operation state, and in the lateral direction of the cleaning device, the first guiding plate 10421 and the second guiding plate 10422 extend beyond two ends of the front side wall of the cleaning device to guide water in a region in front of the front side wall of the cleaning device to enter the second water inlet 1032, thereby increasing an amount of water flowing into the second water inlet 1032. In other words, when the first guiding mechanism is in the operation state, the guiding region formed by the first guiding mechanism 1042 is located in front of the second water inlet 1032. For another example, as shown in FIG. 5C, the second water inlet 1032 is provided on the rear side wall of the cleaning device, and the cleaning device moves backward to clean the water surface. In this case, the first guiding mechanism 1042 is in the operation state, and in the lateral direction of the cleaning device, the first guiding plate 10421 and the second guiding plate 10422 extend beyond two ends of the rear side wall of the cleaning device to guide water in a region behind the rear side wall of the cleaning device to enter the second water inlet 1032, thereby increasing an amount of water flowing into the second water inlet 1032. In other words, when the first guiding mechanism is in the non-operation state, the guiding region formed by the first guiding mechanism 1042 is located behind the second water inlet 1032.

The first guiding plate 10421, the second guiding plate 10422, and the second baffle plate 10511d may be respectively driven by different drive mechanisms, or at least two of them may be jointly driven by a same drive mechanism. For example, the drive mechanism may be a drive motor. In some embodiments, at least the first guiding plate 10421 and the second baffle plate 10511d are jointly driven by a same drive mechanism. Because the first guiding plate 10421 and the second baffle plate 10511d rotate in different directions, rotation shafts are perpendicular to each other, and rotation directions may be changed by using a bevel gear pair including two bevel gears perpendicular to each other.

In one embodiment, the first guiding plate 10421, the second guiding plate 10422, and the second baffle plate 10511d are jointly driven by a same drive motor. For example, as shown in FIG. 5D, an output shaft of a sixth motor 10423 is connected to rotation shafts of a first bevel gear 10424 and the second baffle plate 10511d to drive the first bevel gear 10424 and the second baffle plate 10511d to rotate. A second bevel gear 10425 is engaged with the first bevel gear 10424 and rotates with the first bevel gear 10424, and rotation shafts of the first bevel gear 10424 and the second bevel gear 10425 are perpendicular to each other, so that the rotation direction is changed by 90°. The second bevel gear 10425 is fixed to a first cylindrical gear 10426 or integrally formed with the first cylindrical gear 10426, so that the first cylindrical gear 10426 rotates with the second bevel gear 10425. A second cylindrical gear 10427 engaged with the first cylindrical gear 10426 also rotates with the first cylindrical gear 10426 to drive the first guiding plate 10421 connected to the second cylindrical gear 10427 to rotate, enabling the first guiding plate to be opened or closed. An end of the rotation shaft of the second baffle plate 10511d is away from the sixth motor 10423, and the end is connected to a third bevel gear 10428. The third bevel gear 10428 rotates with the second baffle plate 10511d and drives a fourth bevel gear 10429 perpendicularly engaged with the third bevel gear 10428 to rotate. The fourth bevel gear 10429 is fixed to a third cylindrical gear 10430 or integrally formed with the third cylindrical gear 10430. A fourth cylindrical gear 10431 rotates with the third cylindrical gear 10430 to drive the second guiding plate 10422 connected to the fourth cylindrical gear 10431 to rotate, enabling the second guiding plate 10422 to be opened or closed. Two bevel gear pairs are provided, so that the first guiding plate 10421, the second guiding plate 10422, and the second baffle plate 10511d can be jointly driven in two perpendicular directions by only one motor. In this way, the second baffle plate 10511d, the first guiding plate 10421, and the second guiding plate 10422 can be simultaneously opened or closed and switched between the operation state and the non-operation state. This can also reduce mounting space and costs. Certainly, a seventh motor 10434 may alternatively be provided at the second guiding plate 10422. The seventh motor replaces the rotation shaft of the second baffle plate 10511d to drive the third bevel gear 10428, and other transmission components remain unchanged, so that the second guiding plate 10422 can be independently driven. Alternatively, the first guiding plate 10421, the second guiding plate 10422, and the second baffle plate 10511d may be respectively driven by different drive motors, so that the first guiding plate 10421, the second guiding plate 10422, and the second baffle plate 10511d can move separately. This improves machine operation stability and facilitates maintenance.

In one embodiment, as shown in FIG. 5E to FIG. 5G, differences between this embodiment and the above embodiment are as follows: A fifth transmission shaft 10427a extending downward is provided on a lower side surface of the second cylindrical gear 1042 and close to an outer edge of the second cylindrical gear 10427, a circular transmission member 10432 is provided below the second cylindrical gear 10427, a first arc-shaped slot 10432a is provided on the circular transmission member 10432 and close to an outer edge of the circular transmission member 10432, the fifth transmission shaft 10427a of the second cylindrical gear 10427 is inserted into the first arc-shaped slot 10432a, a second rotation shaft 10432b extending upward is provided at a center of an upper side surface of the circular transmission member 10432, and the second rotation shaft 10432b is provided in a shaft hole of the second cylindrical gear 10427, so that the circular transmission member 10432 can be driven by the fifth transmission shaft 10427a to rotate around the second rotation shaft 10432b. A lower side surface of the circular transmission member 10432 is provided with a sixth transmission shaft 10432c extending downward. A plate-shaped transmission member 10433 is provided below the circular transmission member 10432. The first guiding plate 10421 is partially located lower than the plate-shaped transmission member 10433. A second arc-shaped slot 10433a is provided on the plate-shaped transmission member 10433 and close to an outer edge of the plate-shaped transmission member 10433. The sixth transmission shaft 10432c of the circular transmission member 10432 passes through the second arc-shaped slot 10433a and then is inserted into a transmission hole 10421c at an edge of the rotation shaft of the first guiding plate 10421. The lower side surface of the plate-shaped transmission member 10433 is further provided with a third rotation shaft 10433b extending downward. The third rotation shaft 10433b is inserted into a shaft hole 10421d at a center of the rotation shaft of the first guiding plate 10421. In this way, the first guiding plate 10421 can be driven by the sixth transmission shaft 10432c to rotate around the third rotation shaft 10433b. Optionally, the first guiding plate 10421 rotates only within a certain range, and the bevel gear 10425 also rotates only by a certain angle. Therefore, the bevel gear 10425 may be configured as a half gear, that is, as shown in FIG. 5E, the bevel gear 10425 is only partially engaged with the first bevel gear 10424. A transmission component of the second guiding plate 10422 and a transmission component of the first guiding plate 10421 are symmetrically provided. Power may be transmitted by the rotation shaft of the second baffle plate 10511d to the third bevel gear 10428, or a seventh motor 10434 (shown in FIG. 5H) may be provided at the second guiding plate 10422 to independently drive the second guiding plate 10422. As shown in FIG. 5I, the first guiding plate 10421, the second guiding plate 10422, and the second baffle plate 10511d are all in the closed state. As shown in FIG. 5J, the first guiding plate 10421, the second guiding plate 10422, and the second baffle plate 10511d are all in the open state.

In some embodiments, as shown in FIG. 5G, two first arc-shaped slots 10432a are provided on the circular transmission member 10432 and close to the outer edge of the circular transmission member 10432, and the two arc-shaped slots are symmetrically provided relative to the sixth transmission shaft 10432c extending from the lower side surface of the circular transmission member. In this way, the circular transmission member 10432 can be used in each of the transmission component of the first guiding plate 10421 and the transmission component of the second guiding plate 10422, so that a component can be conveniently assembled. This reduces component manufacturing costs and improves production efficiency.

In some embodiments, to ensure that the first guiding plate 10421 and the second guiding plate 10422 are opened or closed in position, an elastic reset member may be further provided. Optionally, the elastic reset member is a spring. The first guiding plate 10421 is used as an example. One end of the spring is connected to a mounting base of the sixth motor, and the other end of the spring is connected to the fifth transmission shaft 10427a of the second cylindrical gear 10427 or the sixth transmission shaft 10432c of the circular transmission member 10432, and the spring applies an elastic pulling force to the fifth transmission shaft 10427a or the sixth transmission shaft 10432c. When the sixth motor stops operating, the first guiding plate 10421 may not be opened or closed in position. In this case, the spring may pull the fifth transmission shaft 10427a or the sixth transmission shaft 10432c to reach a target position, so that the first guiding plate is opened or closed in position. It may be understood that another elastic reset member may also be symmetrically provided at the second guiding plate 10422.

In some embodiments, the second baffle plate 10511d may be omitted when the first guiding plate 10421 and the second guiding plate 10422 are used. In this case, the first guiding plate 10421 and the second guiding plate 10422 can cover the second water inlet 1032 or be opened to expose the second water inlet 1032 and can also perform guiding. The second baffle plate 10511d is omitted to reduce mounting space and costs. Optionally, to ensure a covering effect when the first guiding plate and the second guiding plate are closed in a case where the second baffle plate 10511d is omitted, a sum of lengths of the two guiding plates is not less than a length of the second water inlet 1032, that is, the two guiding plates can completely cover the second water inlet 1032 when closed, to prevent debris from leaking out. When the sum of the lengths of the two guiding plates is greater than the length of the second water inlet 1032, or the two guiding plates may partially overlap in the closed state due to assembly, the two guiding plates may be controlled to be opened or closed sequentially, so that the two guiding plates can normally operate. For example, when the two guiding plates need to be closed, the first guiding plate 10421 is first controlled to be closed in position, and then the second guiding plate 10422 is controlled to be closed in position. In this case, the fourth end 10422b of the second guiding plate 10422 is located outside the second end 10421b of the first guiding plate 10421. When the two guiding plates need to be opened, the second guiding plate 10422 located outside is first controlled to be opened at least until there is space for the first guiding plate 10421 to be opened, and when there is the space for the first guiding plate 10421 to be opened, the first guiding plate 10421 is controlled to be opened. Optionally, the two guiding plates may be respectively driven by different drive motors, so that the two guiding plates are sequentially opened or closed and separately move.

Certainly, the second baffle plate 10511d may alternatively not be omitted. In this case, the cleaning device can still operate when either guiding plate or the second baffle plate 10511d is damaged. For example, when the second baffle plate 10511d fails to be closed, the first guiding plate 10421 and the second guiding plate 10422 may replace the second baffle plate 10511d to cover the second water inlet 1032 or be opened to expose to the second water inlet 1032, or when the first guiding plate 10421 and/or the second guiding plate 10422 fails to be closed, the second baffle plate 10511d may still cover the second water inlet 1032 or be opened to expose to the second water inlet 1032. This improves stability of the cleaning device.

In some embodiments, the first guiding plate 10421 and/or the second guiding plate 10422 are/is at least partially made of a soft material to adapt to different operation environments. For example, a portion of the first guiding plate 10421 close to the second end 10421b and/or a portion of the second guiding plate 10422 close to the fourth end 10422b are/is made of a soft material, so that when the cleaning device moves along an edge, the portions made of a soft material may abut against a side wall. In this way, the cleaning device can normally move along an edge without interference, and the guiding plates are protected from collision and damage. A portion of the first guiding plate 10421 close to the first end 10421a and/or a portion of the second guiding plate 10422 close to the third end 10422a may be made of a rigid material to ensure strength and a guiding effect of each guiding plate. As shown in FIG. 5A1 and FIG. 5A3, the first guiding plate 10421 includes a first segment 10421e made of a rigid material and a second segment 10421f made of a soft material, and/or the second guiding plate 10422 includes a first segment 10422e made of a rigid material and a second segment 10422f made of a soft material. The first guiding plate 10421 and/or the second guiding plate 10422 may alternatively be entirely made of a same material with appropriate hardness, so that when the cleaning device does not move along the edge, the guiding plate can overcome resistance from the water surface to be in an extension state to perform guiding and can bend after the guiding plate is in contact with the side wall when the cleaning device moves along the edge. In this way, the cleaning device can normally move along the edge without interference, and the guiding plates are protected. Optionally, the guiding plate bends in a direction away from the second water inlet 1032 after the guiding plate is in contact with the side wall, to avoid blocking the second water inlet 1032, so that liquid can normally enter through the second water inlet. The guiding plate is entirely made of a same material, so that the guiding plate can be conveniently formed integrally. This reduces manufacturing costs.

In some embodiments, when the first guiding plate 10421 and/or the second guiding plate 10422 are/is in the operation state, the first guiding plate 10421 and/or the second guiding plate 10422 partially extend/extends beyond the edge of the first body. Specifically, a state in which the cleaning device is located on a horizontal surface is used for description. In a projection of the cleaning device on the horizontal surface, the second end 10421b of the first guiding plate 10421 and/or the fourth end 10422b of the second guiding plate 10422 extend/extends beyond the edge of the first body. Optionally, the second end 10421b and/or the fourth end 10422b extend/extends beyond an edge of the moving mechanism 1071. Optionally, the cleaning device includes an anti-collision part 1140. The second end 10421b and/or the fourth end 10422b extend/extends beyond an edge of the anti-collision part. Because a portion, of the guiding plate, extending beyond the first body is made of a soft material, when the cleaning device moves along the edge, the portion made of a soft material can be in contact with the wall of the pool and clean the wall of the pool. Certainly, when the first guiding plate 10421 and/or the second guiding plate 10422 are/is in the operation state, the first guiding plate 10421 and/or the second guiding plate 10422 may alternatively be flush with or located within the edge of the first body.

In some embodiments, when the first guiding mechanism 1042 is in the operation state, that is, when the first guiding plate 10421 and the second guiding plate 10422 are opened, the two guiding plates may oscillate within a certain range to better adapt to a change in a water flow direction. This improves debris collection efficiency. For example, the two guiding plates may freely oscillate with water, so that the two guiding plates are always aligned with the water flow direction. For another example, a sensor may be provided to sense the water flow direction, and the motor may drive, based on the water flow direction, the guiding plate to rotate by an appropriate angle.

In some embodiments, the second water inlet 1032 may serve as a self-cleaning water inlet. In other words, the nozzle 2173 may extend into the first filtering assembly 1050 through the second water inlet 1032. The second baffle plate 10511d, the first guiding plate 10421, and the second guiding plate 10422 are opened before the nozzle 2173 extends into the second water inlet 1032. When there is no second baffle plate 10511d, the first guiding plate 10421 and the second guiding plate 10422 are first opened.

In some embodiments, as shown in FIG. 1, there is one suction assembly 1060. In the forward direction of the cleaning device, the suction assembly 1060 is located behind the first accommodating cavity 10013 or the first filtering box 1051, and the electronic control box 6000 is located inside the second sub-cavity 10014b and at least partially located below the suction assembly 1060. In other words, the electronic control box 6000 is provided at the rear portion of the cleaning device, so that the rear portion of the cleaning device is heavier than the front portion of the cleaning device. As shown in FIG. 24A, there is a step or a tanning ledge in the pool. For example, the tanning ledge or the step includes a first horizontal surface 3301 and a first slope surface 3302 connected to the first horizontal surface 3301 in a tilt manner. When the cleaning device moves from the first horizontal surface 3301 toward the first slope surface 3302, the front portion of the cleaning device first extends beyond the first horizontal surface 3301 and is located above the first slope surface 3302. In this case, water on the first slope surface 3302 applies an upward first action force to the front portion of the cleaning device, and a head portion of the cleaning device continues to move forward due to inertia. Because the front portion of the cleaning device is lighter than the rear portion of the cleaning device, the front portion of the cleaning device cannot be pressed down on the first slope surface 3302 in time. Therefore, the head portion of the cleaning device is easily lifted, and the cleaning device does not easily reach the first slope surface 3302. On the contrary, as shown in FIG. 24B, if the cleaning device moves from the first slope surface 3302 toward the first horizontal surface 3301, the front portion of the cleaning device first extends beyond the first slope surface 3302. In this case, liquid on the first horizontal surface 3301 applies a second action force to the front portion of the cleaning device, and the second action force has a component in the vertical direction and a component in the horizontal direction. Because the front portion of the cleaning device is light, the front portion of the cleaning device cannot be pressed down on the first horizontal surface 3301 in time. Therefore, the front portion of the cleaning device is lifted or flips outward in a direction away from the first horizontal surface 3301, and the cleaning device does not easily reach the first horizontal surface 3301, affecting switching of the cleaning device between the first slope surface 3302 and the first horizontal surface 3301.

As shown in FIG. 2A, to resolve this technical problem, the first water outlet 1041 includes a first liquid discharge sub-opening 10411 and a second liquid discharge sub-opening 10412. The first liquid discharge sub-opening 10411 is located at the front portion of the cleaning device, and the second liquid discharge sub-opening 10412 is located at the rear portion of the cleaning device. For example, the first liquid discharge sub-opening 10411 is located above the first filtering box 1051, and the second liquid discharge sub-opening 10412 is located behind the first filtering box 1051. Under the action of the suction assembly 1060, liquid enters the first filtering box 1051 through the first water inlet or the second water inlet and then is filtered, and after the liquid passes through the suction assembly 1060, a part of the liquid is discharged through the first liquid discharge sub-opening, and a part of the liquid is discharged through the second liquid discharge sub-opening. In a process in which the cleaning device moves from the first horizontal surface 3301 toward the first slope surface 3302, when the front portion of the cleaning device extends beyond the first horizontal surface 3301, because the first liquid discharge sub-opening is located at the front portion of the cleaning device, the liquid discharged through the first liquid discharge sub-opening applies a fourth thrust in a direction toward the first slope surface 3302 to the front portion of the cleaning device, or an action force applied by the liquid discharged through the first liquid discharge sub-opening to the front portion of the cleaning device has a component in the direction toward the first slope surface, and the component is the fourth thrust. The front portion of the cleaning device can be quickly pressed down on the first slope surface 3302 under the fourth thrust to prevent the front portion of the cleaning device from being lifted. Alternatively, in a process in which the cleaning device moves from the first slope surface 3302 toward the first horizontal surface 3301, when the front portion of the cleaning device extends beyond the first slope surface 3302, because the first liquid discharge sub-opening is located at the front portion of the cleaning device, the liquid discharged through the first liquid discharge sub-opening applies a fourth thrust in a direction toward the first horizontal surface 3301 to the front portion of the cleaning device, or an action force applied by the liquid discharged through the first liquid discharge sub-opening to the front portion of the cleaning device has a component in the direction toward the first horizontal surface, and the component is the fourth thrust. The front portion of the cleaning device can be quickly pressed down on the first horizontal surface under the fourth thrust to prevent the front portion of the cleaning device from being lifted in a direction away from the first horizontal surface 3301. Each of the first liquid discharge sub-opening and the second liquid discharge sub-opening may be an inclined opening or a straight opening.

In another embodiment, as shown in FIG. 2B, there are two suction assemblies 1060. At least one suction assembly 1060 is provided at the rear portion of the cleaning device, and at least one suction assembly 1060 is provided at the front portion of the cleaning device. The liquid outlet portion includes a plurality of first water outlets 1041. Some first water outlets 1041 are provided at the front portion of the cleaning device, and some first water outlets 1041 are provided at the rear portion of the cleaning device. Each suction assembly 1060 corresponds to one first water outlet 1041, each suction assembly 1060 corresponds to a plurality of first water outlets 1041, or the plurality of suction assemblies correspond to one first water outlet. For ease of description, the first water outlet 1041 located at the rear portion of the cleaning device is expressed as a first water sub-outlet 1041a, and the first water outlet 1041 located at the front portion of the cleaning device is expressed as a second water sub-outlet 1041b. The suction assembly 1060 located at the front portion of the cleaning device is expressed as a second suction assembly, and the suction assembly 1060 located at the rear portion of the cleaning device is expressed as a first suction assembly. Under the action of the first suction assembly, the liquid enters the first filtering box 1051 through the first water inlet or the second water inlet, and a part of the liquid filtered by the first filtering box 1051 is discharged through the first water sub-outlet 1041a. The liquid discharged through the first water sub-outlet 1041a applies a third thrust to the cleaning device, and a direction of the third thrust is opposite to a direction in which the liquid is discharged through the first water sub-outlet 1041a. Under the action of the second suction assembly, a part of the liquid filtered by the first filtering box 1051 is discharged through the second water sub-outlet 1041b, and the liquid discharged through the second water sub-outlet 1041b applies a fourth thrust to the cleaning device. A direction of the fourth thrust is opposite to a direction in which the liquid is discharged through the second water sub-outlet 1041b.

For example, there are two suction assemblies 1060: the first suction assembly and the second suction assembly, and both the first water sub-outlet 1041a and the second water sub-outlet 1041b are located at the top of the first body. Because one second suction assembly and at least one second water sub-outlet 1041b are located at the front portion of the cleaning device, when the cleaning device moves from the first horizontal surface 3301 toward the first slope surface 3302 or moves from the first slope surface 3302 toward the first horizontal surface 3301, the liquid discharged through the second water sub-outlet 1041b under the action of the second suction assembly applies a fourth thrust to the cleaning device, and under the fourth thrust, the front portion of the cleaning device can be prevented from being lifted.

In one embodiment, the first filtering box 1051 is provided with a first avoidance region, the suction assembly 1060 is provided in the first avoidance region, and the second water sub-outlet 1041b is provided above the first avoidance region. In this way, the second suction assembly and the second water sub-outlet 1041b are provided at the front portion of the cleaning device. In other words, the filtering box surrounds the suction assembly 1060. For example, a middle portion of the first filtering box 1051 is provided with a hollow channel as the first avoidance region. The first filtering box 1051 may be square, circular, or the like. The hollow channel may be circular, square, or in an irregular shape.

In one embodiment, a side wall of the first accommodating cavity 10013 is provided with liquid discharge openings respectively corresponding to the first water sub-outlet 1041a and the second water sub-outlet 1041b, so that liquid can flow out and flow to a corresponding water outlet. Optionally, the first water sub-outlet 1041a is located behind the first accommodating cavity 10013, and correspondingly, a second liquid discharge opening 10013a may be provided on a rear side wall of the first accommodating cavity 10013, so that the liquid can flow to the first water sub-outlet. Second water sub-outlets 1041b are located to the left and to the right of the first filtering assembly 1050, and correspondingly, a liquid discharge opening may be provided on each of a left side wall and a right side wall of the first accommodating cavity 10013, so that the liquid can flow to the second water sub-outlet. Optionally, there are second water sub-outlets 1041b respectively located to the left and located to the right of the first accommodating cavity 10013, and one liquid discharge opening may be provided on each of the left side and the right side of the first accommodating cavity 10013, so that the liquid can flow to the second water sub-outlets located to the left and to the right.

Alternatively, in another embodiment, as shown in FIG. 2C, there are at least three suction assemblies 1060. There are at least two second suction assemblies and at least one first suction assembly. The at least two second suction assemblies are provided around the filtering box or provided in the avoidance region of the filtering box. Specifically, there are two second suction assemblies and one first suction assembly. In the forward direction of the cleaning device, the first suction assembly is provided behind the first accommodating cavity 10013 or the first filtering box 1051, and the two second suction assemblies are provided symmetrically on two sides of the first filtering box 1051. Each second suction assembly corresponds to one second water sub-outlet 1041b. The two second water sub-outlets 1041b are symmetrically arranged. In this case, when the cleaning device moves from the first horizontal surface 3301 toward the first slope surface 3302 or moves from the first slope surface 3302 toward the first horizontal surface 3301, the two second suction assemblies are turned on, so that liquid sprayed out through each second water sub-outlet 1041b can apply a fourth thrust to prevent the front portion of the cleaning device from being lifted. Alternatively, the two second suction assemblies share one second water sub-outlet 1041b, and the second water sub-outlet 1041b is located at the front portion of the cleaning device, so that a fourth thrust can also be generated.

In one embodiment, as shown in FIG. 2C, two side walls of the first filtering box 1051 are respectively provided with a first avoidance region 10541 and a second avoidance region 10542. One second suction assembly is provided in the first avoidance region 10541, and the other second suction assembly is provided in the second avoidance region 10542. One second water sub-outlet 1041b is located above the first avoidance region 10541, and the other second water sub-outlet 1041b is located above the second avoidance region 10542. Alternatively, the two second suction assemblies share one second water sub-outlet 1041b. The second water sub-outlet 1041b may be located above the first avoidance region 10541 or the second avoidance region 10542 to avoid the first filtering box 1051 without affecting removal and placement of the first filtering box 1051 from a top opening of the cleaning device. For example, each of the first avoidance region 10541 and the second avoidance region 10542 is a groove or an opening provided on an outer side wall of the first filtering box 1051, and the groove or the opening is recessed inward. If the first filtering box 1051 is not removed or placed through the top opening of the first body, the second water sub-outlet 1041b may be located above the first avoidance region 10541, the second avoidance region 10542, or the filtering box.

In one embodiment, there may be two, three, or more first suction assemblies, and there may be one, two, three, or more first water sub-outlet 1041a. Each first suction assembly corresponds to one first water sub-outlet 1041a, at least two first suction assemblies correspond to one first water sub-outlet 1041a, or one first suction assembly corresponds to at least two first water sub-outlets 1041a. Similarly, there may be three, four, five, or more second suction assemblies, and each second suction assembly may correspond to one second water sub-outlet 1041b, at least two second suction assemblies may correspond to one second water sub-outlet 1041b, or one second suction assembly may correspond to at least two second water sub-outlets 1041b.

In one embodiment, at least three second suction assemblies and at least one second water sub-outlet 1041b are provided at the front portion of the cleaning device. A plurality of second suction assemblies are provided at the front portion of the cleaning device to increase a suction force of the suction assembly 1060, so that the liquid enters the first filtering box 1051 more quickly through the first water inlet or the second water inlet and then is filtered, and the filtered liquid is more quickly discharged through the plurality of second water sub-outlets 1041b, thereby improving the cleaning efficiency. In addition, the plurality of second suction assemblies may further generate a fourth thrust, so that when the cleaning device moves between the first horizontal surface 3301 and the first slope surface 3302, the front portion of the cleaning device can be quickly pressed down on the first slope surface 3302 or the first horizontal surface 3301 under the fourth thrust, enabling the cleaning device to smoothly move between the first horizontal surface 3301 and the first slope surface 3302.

In some embodiments, a fourth water inlet may be provided at the bottom of the cleaning device. The fourth water inlet is different from the first water inlet 1031, and the fourth water inlet is in fluid communication with the second water sub-outlet 1041b to form a flow channel. Under suction of the second suction assembly, the liquid enters the flow channel through the fourth water inlet and is discharged through the second water sub-outlet 1041b. The liquid can be directly discharged through the second water sub-outlet 1041b after entering through the fourth water inlet without passing through the first filtering assembly 1050. In this way, the liquid sprayed out through the second water sub-outlet 1041b applies greater downward pressure to the cleaning device. The water inlet may be provided right below the second water sub-outlet 1041b to maximize efficiency of the flow channel. Certainly, the water inlet may alternatively be provided at another position on the bottom of the cleaning device based on an arrangement requirement.

In some embodiments, each water outlet may be opened or closed based on a floating-submerging state of the cleaning device. Optionally, when the cleaning device is about to submerge, in addition to the first water sub-outlet, at least one second water sub-outlet is also controlled to allow water to be discharged to provide greater downward pressure for the cleaning device, so that the cleaning device can submerge more quickly. Optionally, when the cleaning device is about to float up, the second water sub-outlet is controlled to stop allowing the water to be discharged, so that the cleaning device can float up more quickly. Certainly, the first water sub-outlet may also be controlled to stop allowing the water to be discharged to further increase a speed at which the cleaning device floats up.

In some embodiments, a water outlet switcher may be provided in the cleaning device and configured to switch water outlets, enabling liquid to be discharged through different water outlets. Optionally, a liquid flow channel is formed in the water outlet switcher. An inlet end of the liquid flow channel is in fluid communication with the first water inlet 1031, and an outlet end of the liquid flow channel is in fluid communication with different water outlets in a switchable manner. Optionally, the water outlet switcher is provided behind the main water pump 1061, and the water outlet switcher can rotate. The water outlet switcher rotates by different angles, so that the outlet end of the liquid flow channel can be aligned with different water outlets, enabling the liquid to be discharged through different water outlets.

In some embodiments, a posture of the cleaning device may be detected in real time, and whether water is discharged through the second water sub-outlet 1041b may be controlled based on a posture detection result. Optionally, a sensor such as a gyroscope or an accelerometer may be used to detect the posture of the cleaning device in real time, and when it is detected that the front portion of the cleaning device is lifted, at least one second water sub-outlet 1041b is controlled to allow water to be discharged, so that the front portion of the cleaning device is pressed down. A quantity of water outlets for water discharging and/or power of a corresponding suction assembly may be further controlled based on a lifting degree of the front portion of the cleaning device. A greater lifting degree of the front portion of the cleaning device indicates a larger quantity of water outlets for water discharging and/or higher power of the corresponding suction assembly to ensure that the front portion of the cleaning device can be pressed down.

In some embodiments, whether water is discharged through the second water sub-outlet 1041b may be controlled based on a planned path of the cleaning device or a condition of a path that the cleaning device is about to reach. For example, if the planned path of the cleaning device indicates that the cleaning device is about to start climbing, or an image sensor of the cleaning device senses that the cleaning device is about to start climbing in the forward direction, at least one second water sub-outlet 1041b is controlled to allow water to be discharged until the cleaning device finishes climbing, to prevent the front portion of the cleaning device from being lifted. Optionally, the quantity of water outlets for water discharging and/or the power of the corresponding suction assembly may be adjusted based on a specific path condition. For example, a larger gradient of a slope in front of the cleaning device indicates a larger quantity of water outlets for water discharging and/or higher power of the corresponding suction assembly.

In some embodiments, a direction of at least one water outlet is adjustable, so that a water discharge direction is adjusted based on different path conditions, to ensure that the front portion of the cleaning device can be effectively pressed down under a reaction force generated by water, and the reaction force further helps the cleaning device climb. For example, when the gradient is less than 15°, a direction of the second water sub-outlet 1041b is perpendicular to a length direction (namely, a direction from front to back) of the first body, so that when the cleaning device climbs the slope, a direction of water sprayed out through the second water sub-outlet is perpendicular to a direction of a slope surface. In this way, stable pressure is applied to the front portion of the cleaning device to press down the front portion of the cleaning device. When the gradient ranges from 15° and 25°, an angle between the direction of the second water sub-outlet and the length direction (namely, the direction from front to back) of the cleaning device is 75°, so that pressure is applied to the front portion of the cleaning device to press down the front portion of the cleaning device, and an upward component force along the slope surface further helps the cleaning device climb. When the gradient is greater than 25°, the angle between the direction of the second water sub-outlet and the length direction (namely, the direction from front to back) of the cleaning device is 60°, so that the front portion of the cleaning device can still be prevented from being lifted, and this better helps the cleaning device climb.

In some embodiments, a lifting degree of the front portion of the cleaning device may be reduced by using some bionic designs. For example, a shark gill flow guiding groove may be provided at the front portion of the first body, so that downward pressure is generated when water flows through the shark gill flow guiding groove.

In one embodiment, if the second water sub-outlet 1041b and the second suction assembly are provided at the front portion of the cleaning device, when the cleaning device is switched from the first motion state to the second motion state, because the front portion of the cleaning device needs to be lifted, the second suction assembly located at the front portion of the cleaning device is turned off without generating the fourth thrust, so that the cleaning device can conveniently move from the bottom wall of the pool to the side wall of the pool.

In one embodiment, if the second water sub-outlet 1041b and the second suction assembly are provided at the front portion of the cleaning device, and the second water inlet is provided at the front portion of the cleaning device, when the cleaning device cleans the water surface, the suction assembly 1060 at the front portion of the cleaning device is turned off. If the second suction assembly is turned on, liquid is continuously sprayed out through the second water sub-outlet 1041b to stir liquid around the front portion of the cleaning device, causing debris in the liquid to move away from the front portion of the cleaning device. Consequently, the debris around the front portion of the cleaning device cannot enter the first filtering box 1051 through the second water inlet 1032, affecting the water surface cleaning effect of the cleaning device. Therefore, when the cleaning device cleans the water surface, the second suction assembly located at the front portion of the cleaning device is turned off.

In one embodiment, as shown in FIG. 5A1, a housing of the cleaning device on which the first water sub-outlet 1041a is located is recessed downward to form a recessed cavity 10015. At least a front side, a left side, and a right side of the recessed cavity are surrounded by a high housing, so that the liquid sprayed out through the first water sub-outlet 1041a is blocked by the surrounding high housing. This alleviates a stir performed on the liquid in front of the cleaning device, thereby ensuring the water surface cleaning effect.

Because the plurality of second suction assemblies are provided, a plurality of second liquid discharge openings 10013a are provided on the side wall of the first accommodating cavity 10013. Each second suction assembly corresponds to at least one second liquid discharge opening 10013a and one first sub-cavity, so that the liquid filtered by the first filtering box 1051 can enter different first sub-cavities through different second liquid discharge openings and is finally discharged through different second suction assemblies and different second water sub-outlets 1041b or a same second water sub-outlet 1041b. In this way, the liquid is cleaned.

For example, when the cleaning device is provided with the flow guiding cover 1015, each second suction assembly corresponds to one flow guiding cover 1015, and each flow guiding cover has a first sub-cavity. One end of the flow guiding cover is in fluid communication with the second liquid discharge opening, and the other end of the flow guiding cover is in fluid communication with the second water sub-outlet 1041b. Specifically, when there are three suction assemblies 1060 including one first suction assembly and two second suction assemblies, there are three flow guiding covers, the first suction assembly corresponds to one flow guiding cover, and each second suction assembly corresponds to one flow guiding cover. Each flow guiding cover may correspond to at least one second liquid discharge opening, one suction assembly 1060, and at least one first water outlet 1041.

When two second suction assemblies or a plurality of second suction assemblies at the front portion of the first body share one second water sub-outlet 1041b, one end of each of a plurality of flow guiding covers is in fluid communication with a corresponding second liquid discharge opening, and the other end of each of the plurality of flow guiding covers is in fluid communication with the second water sub-outlet 1041b.

If the cleaning device returns to the base station, when the base station performs self-cleaning on the first filtering box 1051 of the cleaning device, the base station provides a clean water source to the second water sub-outlet 1041b or the first water sub-outlet 1041a. If when the cleaning device performs cleaning, the main motor of the suction assembly 1060 rotates in a forward direction, when the base station cleans the first filtering box 1051, the main motor of the suction assembly 1060 rotates in a reverse direction, the clean water source on the base station is in fluid communication with the first water sub-outlet 1041a and/or the second water sub-outlet 1041b, clean water enters the first sub-cavity through the first water sub-outlet 1041a and/or the second water sub-outlet 1041b and then enters the first filtering box 1051 through the second liquid discharge opening to clean the first filtering box 1051, and after the first filtering box 1051 is cleaned with the clean water, the water is discharged from the first body through the self-cleaning debris discharge opening.

Alternatively, in another embodiment, as shown in FIG. 4E, a quantity of suction assemblies 1060 is not increased. In the forward direction of the cleaning device, the first water outlet 1041, the suction assembly 1060, and the electronic control box 6000 are all located in front of the first accommodating cavity 10013 or the filtering box, and the filtering box is located at the rear portion of the cleaning device. In this case, the front portion of the cleaning device is heavier than the rear portion of the cleaning device, and the second water inlet is provided on a rear side surface of the rear portion of the cleaning device. When the cleaning device cleans the bottom wall or the side wall of the pool, the cleaning device moves forward. When the cleaning device cleans the water surface, the cleaning device moves backward. When the cleaning device moves forward from the first horizontal surface 3301 toward the first slope surface 3302 or from the first slope surface 3302 toward the first horizontal surface 3301, because the front portion of the cleaning device is heavier than the rear portion of the cleaning device, the liquid sprayed out through the first nozzle 1041 under the suction action of the suction assembly 1060 applies a fourth thrust to the front portion of the cleaning device to prevent the front portion of the cleaning device from being lifted.

The above manners for preventing or reducing the front portion of the cleaning device from being lifted may be performed separately, or at least two manners may be performed in combination. This is not limited herein.

In some cases, the wall of the pool may be an irregular surface, for example, a curved surface, causing the cleaning device to be difficult to be attached to the surface, which affects the cleaning effect. To improve the cleaning effect for the irregular surface, improvements may be made to a main cleaning assembly 1200, or an auxiliary cleaning assembly is provided on the cleaning device.

The terms "first", "second", "third", and the like in the present disclosure are merely intended for a purpose of description, and shall not be understood as an indication of a quantity of indicated technical features. Therefore, a feature limited by "first", "second", or "third" may explicitly or implicitly include at least one of the features. All directional indications (for example, up, down, left, right, front, rear...) in embodiments of the present disclosure are merely intended for explaining a relative position relationship, movement, and the like of components in a specific posture (as shown in the accompanying drawings), and the directional indications correspondingly change if the particular posture changes. In addition, the terms "include", "have", and any variants thereof are intended to cover non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

The above description describes only embodiments of the present disclosure and is not intended to limit the scope of the present disclosure. Any equivalent structure or equivalent process transformation performed based on the contents of this specification and the accompanying drawings of the present disclosure or applied directly or indirectly in other related technical fields shall fall within the protection scope of the present disclosure.

## Claims

1. A swimming pool robot, comprising:
a first body;
a second water inlet provided on the first body;
a first filtering box at least partially provided in the first body, wherein the second water inlet is in fluid communication with the first filtering box; and
a guiding mechanism provided on the first body, wherein when the guiding mechanism is in an operation state, in a lateral direction of the first body, the guiding mechanism at least partially extends beyond the first body and is configured to guide liquid outside the first body to flow toward the second water inlet and flow into the first filtering box through the second water inlet.

2. The swimming pool robot according to claim 1, wherein the guiding mechanism is switched between the operation state and a non-operation state, wherein when the guiding mechanism is in the non-operation state, in the lateral direction of the first body, the guiding mechanism does not extend beyond the first body.

3. The swimming pool robot according to claim **1,** wherein the guiding mechanism comprises:
a first guiding plate, wherein the first guiding plate comprises a first end and a second end, wherein the first end of the first guiding plate is rotatably provided on the first body; and
a second guiding plate, wherein the second guiding plate comprises a third end and a fourth end, wherein the third end of the second guiding plate is rotatably provided on the first body, wherein:
when the guiding mechanism is in the operation state, in the lateral direction of the first body, the second end of the first guiding plate and the fourth end of the second guiding plate extend beyond the first body.

4. The swimming pool robot according to claim 3, wherein when the guiding mechanism is in the operation state, the first guiding plate and the second guiding plate are located on two sides of the second water inlet.

5. The swimming pool robot according to claim 3 or 4, wherein when the guiding mechanism is in the operation state, a distance between the first end and the third end is less than a distance between the second end and the fourth end, and a flared guiding region is formed between the first guiding plate and the second guiding plate.

6. The swimming pool robot according to any one of claims 3 to 5, wherein in the lateral direction of the first body, first space is formed between the first end and the third end, wherein when the guiding mechanism is in the operation state, the second end and the fourth end are located outside the first space.

7. The swimming pool robot according to claim 6, wherein when the guiding mechanism is in a non-operation state, the second end and the fourth end are located within the first space.

8. The swimming pool robot according to any one of claims 3 to 7, wherein when the guiding mechanism is in the non-operation state, in a first water flow direction in which liquid in a pool flows toward the second water inlet, the first guiding plate and the second guiding plate are located upstream relative to the second water inlet.

9. The swimming pool robot according to any one of claims 3 to 8, wherein the second water inlet is provided on a front side wall of the first body, and the swimming pool robot moves forward to clean a water surface, wherein when the guiding mechanism is in the operation state, in the lateral direction of the first body, the second end of the first guiding plate and the fourth end of the second guiding plate extend beyond two ends of the front side wall.

10. The swimming pool robot according to any one of claims 3 to 9, wherein when the guiding mechanism is in the non-operation state, the first guiding plate and the second guiding plate cover at least a portion of the second water inlet.

11. The swimming pool robot according to any one of claims 3 to 10, further comprising a second baffle plate provided on the first body, wherein the second baffle plate is configured to cover the second water inlet and is able to be opened to expose the second water inlet, wherein when the guiding mechanism is in the operation state, the second baffle plate is configured to be opened to expose the second water inlet.

12. The swimming pool robot according to claim **11,** further comprising a controller, wherein when the swimming pool robot needs to clean the water surface, the controller first controls the guiding mechanism to be switched from the non-operation state to the operation state and then controls the second baffle plate to be opened to expose the second water inlet.

13. The swimming pool robot according to claim 11 or 12, wherein the second baffle plate and at least one of the first guiding plate or the second guiding plate are driven by a same motor.

14. A method for controlling a swimming pool robot, wherein the swimming pool robot comprises:
a first body;
a first filtering box at least partially provided in the first body;
a second water inlet provided on the first body, wherein the second water inlet is in fluid communication with the first filtering box; and
a guiding mechanism provided on the first body; and
the method comprises:
controlling the guiding mechanism to move from a retracted position to a deployed position, wherein when the guiding mechanism is at the deployed position, the guiding mechanism at least partially extends beyond a lateral edge of the first body and is configured to guide liquid outside the first body to flow toward the second water inlet and flow into the first filtering box.

15. The swimming pool robot according to claim 14, further comprising controlling the guiding mechanism to move from the deployed position to the retracted position, wherein when the guiding mechanism is at the retracted position, at least a portion of the guiding mechanism covers at least a portion of the second water inlet.
